# EUROPEAN PATENT SPECIFICATION

(11) **EP 1 250 018 B1**
(45) Date of publication and mention of the grant of the patent: **13.10.2010**
(21) Application number: 01926153.6
(22) Date of filing: 08.05.2001
(51) Int. Cl.: H04B 10/12

(54) **WIRELESS BASE STATION NETWORK SYSTEM, CONTROL STATION, BASE STATION SWITCHING METHOD, SIGNAL PROCESSING METHOD, AND HANDOVER CONTROL METHOD**
DRAHTLOSES BASISSTATIONSNETZSYSTEM, STEUERUNGSSTATION, BASISSTATIONSVERMITTLUNGSVERFAHREN, SIGNALVERARBEITUNGSVERFAHREN SOWIE WEITERREICHUNGSSTEUERVERFAHREN
SYSTEME DE RESEAU DE STATIONS DE BASE RADIO, STATION DE CONTROLE, PROCEDE DE COMMUTATION DE STATION DE BASE, PROCEDE DE TRAITEMENT DE SIGNAL ET PROCEDE DE COMMANDE DE TRANSFERT

(30) Priority: 10.05.2000 JP 2000137879; 14.12.2000 JP 2000380882
(43) Date of publication of application: 16.10.2002
(73) Proprietor: NTT DoCoMo, Inc., Tokyo 100-6150 (JP)
(72) Inventor: ABURAKAWA, Yuji, Yokohama-shi, Kanagawa 235-0033 (JP); YOSHINO, Hitoshi, Yokosuka-shi, Kanagawa 238-0026 (JP); OTSU, Toru, Yokohama-shi, Kanagawa 236-0057 (JP); YAMAO, Yasushi, Yokosuka-shi, Kanagawa 239-0822 (JP)
(74) Representative: Vinsome, Rex Martin
(86) International application number: PCT/JP2001/003845
(87) International publication number: WO 2001/086982

(56) References cited:
- EP-A- 0 391 597
- EP-A- 0 409 259
- EP-A- 0 994 582
- CN-A- 1 224 986
- JP-A- 11 298 939
- US-A- 5 682 256
- US-A- 6 016 379
- US-A- 6 016 426
- HAN-CHIEH CHAO ET AL.: 'Channel assigment schemes for WDN-based personal communications network' WCNC. 1999 IEEE WIRELESS COMMUNICATIONS AND NETWORKING CONNFERENCE vol. 2, 1999, pages 698 - 702, ISBN 0780356683, XP002945641

## Description

### TECHNICAL FIELD

The present invention relates to a radio communication system, more particularly, to a network system of radio base stations and the method for switching base stations, in which a base station provided in each of a plurality of cells and a control station that controls the base stations are connected by optical fibers using a wavelength multiplexing transmission or a sub-carrier optical transmission method.

The present invention also relates to a system in which a control station receives signals from a plurality of base stations and equalizes those signals, which control station controls a communication network including the base stations, and which signals are sent to a plurality of base stations by a mobile station under handover.

### BACKGROUND ART

In a network of radio base stations to which optical wavelength division multiplexing (WDM) is applied for example, there are generally provided with a plurality of base stations that communicate with radio communication terminals, and a control station that comprehensively controls the plurality of base stations and communicates with external communication networks, wherein those stations are connected by optical fiber lines.

A conventional base station converts a signal received from a radio communication terminal into an optical signal having a wavelength specific for the base station in order to transmit the optical signal to the control station via the optical fiber lines.

Therefore, the control station has an optical receiving device that can support a plurality of wavelengths the number of which wavelengths equals to the number of the base stations in the network. This optical receiving device includes a plurality of optical receivers wherein each of the plurality of optical receivers can support a single wavelength. Each of these optical receivers is responsible for receiving optical signals from a single base station and converting the received optical signals into electrical signals. The converted signals are switched by a selection switch, to become received electrical signals.

That is, when a mobile station moves to another cell, the control station has to switch the selection switch into another optical receiver in order to continue receiving from that mobile station.

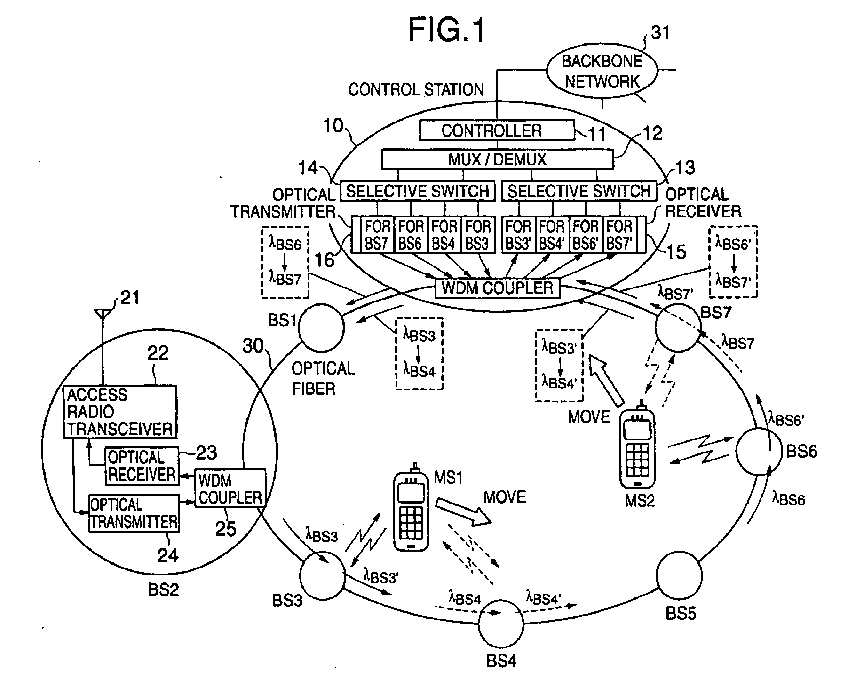

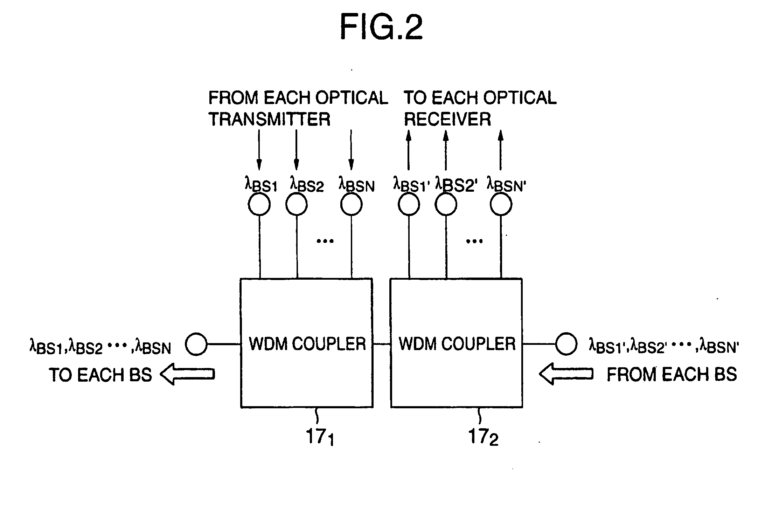

The conventional WDM-applied network of radio base stations is described hereinafter with reference to Figs.1 and 2. Fig.1 is a block diagram showing an example of a configuration of the conventional network system of radio base stations.

A control station 10 and base stations (BS1-7, hereinafter referred to as "BS", the number of which base stations is not limited to 7) are connected into a loop structure by optical fibers 30 in which optical signals are transmitted and received by using a wavelength multiplexing transmission method.

In this configuration, when the control station 10 transmits an optical signal to each BS, since a different wavelength for receiving is assigned to each BS, and optical transmitter 16 for transmitting a wavelength specific for each BS is provided in the control station 10, each optical signal is combined for wavelength multiplexing transmission and is transmitted by a WDM coupler 17.

In each of the BS1-7, an optical signal having a wavelength specific for each BS is split off by each WDM coupler 25, and is received by an optical receiver 23. Signals from the optical receiver 23 are radio-transmitted to radio communication terminals (MS1 and MS2, hereinafter referred to as "MS", the number of which terminals is not limited to 2) via an antenna 21 by an access radio (radio communication between the BS and the radio communication terminal) transceiver 22.

A radio signal from the MS is received by the access radio transceiver 22 via the antenna 21, is converted into an optical signal by an optical transmitter 24, and is then combined by the WDM coupler 25 for wavelength multiplexing transmission.

The access radio transceiver 22 in the BS is provided with a radio signal demodulator for mobile communications that demodulates and converts the received signals from the MS into digital signals, and a radio signal modulator for mobile communications that converts digital signals outputted from the optical receiver 23 into signals having radio frequencies for mobile communication.

In the control station 10, the optical signals from each BS are split off into single-wavelength signals by the WDM coupler 17, and are then received by the optical receiver 15.

When, for example, the MS1 is communicating with an MS3, the control station uses a wavelength λ_{BS3} for transmitting signals to the BS3, and the BS3 uses a wavelength λ_{BS3}. for transmitting signals to the control station.

Then, when the MS moves and commences to communicate with the BS4, in the control station 10, the selection switch 14 is operated such that an optical transmitter for the wavelength λ_{BS3} of the BS3 is switched into an optical transmitter for a wavelength λ_{BS4} of the BS4, and the control station 10 uses the wavelength λ_{BS4} for transmitting signals to the BS4. At the same time, the BS4 uses the wavelength λ_{BS4}. for transmitting signals to the control station. Since a wavelength used for signals to the control station is consequently switched from the wavelength λ_{BS3}. into λ_{BS4}., the control station 10 switches a receiving optical receiver into one for the wavelength λ_{BS4}. by the selection switch 13 in order to receive the signals, whereby the MS and the control station can continue communicating.

Fig.2 is a diagram showing an example of the WDM coupler in the conventional control station.

Signals from the optical transmitters for each wavelength are inputted to a WDM coupler 17₁, are combined for wavelength multiplexing, and are then transmitted to each BS.

Therefore, when a transmitting BS is switched from the BS3 to the BS4, the optical transmitter is accordingly switched from one for λ _{BS3} to another for λ_{BS4}.

At the same time, in a WDM coupler 17₂, optical signals having wavelengths λ_{BS1}.-λ_{BSN}. from each BS are split off by wavelength into different terminals, and are respectively received by the optical receiver.

Therefore, when a receiving BS is switched from the BS3 to the BS4, the optical receiver is then switched by the selection switch, since it is necessary for an output terminal to be switched from one for λ_{BS3}. to another for λ_{BS4}.

However, when switching of base stations due to the movement of the radio communication terminals is required frequently, there appears a problem in that, in the control station, the workload for performing selective combination such as one in the selection switches of each optical transceiver becomes excessive so that the processing requirement of the control station becomes too high.

Further examples of the prior art are disclosed in EP-A-0994582 and US-A-5682256.

EP-A-0994582 discloses a wireless communication system comprising a base station controller which communicates with a plurality of base stations using optical fibres.

US-A-5682256 discloses a communications system comprising a base centre having a plurality of transceivers and a matrix switch for selectively interconnecting the transceivers with a plurality of radio ports through a fibre optic network.

### DISCLOSURE OF THE INVENTION

Therefore, the general object of the present invention is to provide a novel and advantageous network system of radio base stations, which can resolve the above-mentioned problem that the prior art has.

The detailed object of the present invention is to provide an effective network system of radio base stations and the method for switching of base stations that can reduce processing load in a control station even when switching of base stations occurs due to the movement of radio communication terminals.

According to an aspect of the present invention there is provided a network system of radio base stations comprising base stations (BS) provided in a plurality of cells and a control station (40) controlling the base stations, in which the base stations and the control station are connected by optical fibers using a wavelength multiplexing transmission method, wherein:
the base station comprises a variable-wavelength transmitter (54) for transmitting an optical signal having a predetermined wavelength, and an optical coupler (55) for combining optical signals from the variable-wavelength transmitter in order to transmit the optical signals using the wavelength multiplexing transmission method;
the control station comprises a plurality of optical receivers (43) for receiving wavelengths of the optical signals transmitted using the wavelength multiplexing transmission method, and an optical coupler (45) for splitting the wavelength-multiplexed optical signals transmitted from the base stations to the optical receivers by wavelength;
characterised in that when the radio communication terminal (MS) communicating with the base station moves and changes the base station to communicate with, a new base station which communicates with the radio communication terminal after a movement of the radio communication terminal controls the wavelength of the variable-wavelength transmitter, and then transmits the optical signals to the control station with the same wavelength as one used for transmitting by a previous base station which communicates with the radio communication terminal before the movement so that the control station can use the same optical receiver for the radio communication terminal before and after its movement.

According to another aspect of the present invention there is provided a 7.A method for switching of base stations in a network system of radio base stations comprising base stations (BS) provided in a plurality of cells and a control station (40) controlling the base stations, in which the base stations and the control station are connected by optical fibers, wherein:
a wavelength for transmission from the base station to the control station is set at the beginning of a communication between the base station and the radio communication terminal, and this wavelength for transmission is fixed while the radio communication terminal (MS) is communicating;
characterised in that even when the radio communication terminal moves and changes the base station to communicate with a new base station which communicates with the radio communication terminal after a movement of the radio communication terminal transmits information from the radio communication terminal to the control station on the wavelength for transmission set for the radio communication terminal so that the control station can use the same optical receiver (43) for the radio communication terminal before and after its movement.

These objects are achieved by a network system of radio base stations comprising base stations provided in a plurality of cells and a control station controlling the base stations, in which the base stations and the control station are connected by optical fibers with a wavelength multiplexing transmission, wherein: the base station comprises a variable-wavelength transmitter for transmitting an optical signal having a predetermined wavelength, and an optical coupler for combining optical signals from the variable-wavelength transmitter in order to transmit the optical signals by using wavelength multiplexing transmission; the control station comprises a plurality of optical receivers for receiving wavelengths of the optical signals transmitted using a wavelength multiplexing transmission method, and an optical coupler for splitting the wavelength-multiplexed optical signals transmitted from the base stations into the optical receivers by wavelength, and when the radio communication terminal communicating with the base station moves and changes the base station to communicate with, a new base station which communicates with the radio communication terminal after a movement of the radio communication terminal controls the wavelength of the variable-wavelength transmitter, and then transmits the optical signals to the control station using the same wavelength as the one used for transmitting by a previous base station which communicates with the radio communication terminal before the movement.

Although the coupler may be a WDM coupler in this context, any other devices capable of combining and splitting off optical signals by wavelength can be employed.

Other objects, features, and advantages of the present invention are elucidated in the following detailed description with reference to the accompanied figures.

### BRIEF DESCRIPTION OF THE DRAWINGS

Fig.1 is a diagram partially showing a schematic of a conventional network system of radio base stations;
Fig.2 is a diagram showing an example of a WDM coupler of a control station in the conventional system;
Fig.3 is a diagram partially showing a schematic of a radio communication system according to a first embodiment of the present invention;
Fig.4 is a diagram showing an example of a WDM coupler of a control station in the first embodiment;
Fig.5 is a diagram partially showing a schematic of a radio communication system according to a second embodiment of the present invention;
Fig.6 is a diagram showing an example of a WDM coupler of a BS in the second embodiment of the present invention;
Fig.7 is a diagram partially showing a schematic of a radio communication system according to a third embodiment of the present invention;
Fig.8 is a diagram showing an example of a WDM coupler of a BS in the third embodiment of the present invention;
Fig.9 is a diagram partially showing a schematic of a radio communication system according to a fourth embodiment of the present invention;
Fig.10 is a diagram partially showing a schematic of a radio communication system according to a fifth embodiment of the present invention;
Fig.11 is a diagram partially showing a schematic of a radio communication system according to a sixth embodiment of the present invention;
Fig.12 is a diagram partially showing a schematic of a radio communication system according to a seventh embodiment of the present invention;
Fig.13 is a diagram partially showing a schematic of a radio communication system according to the seventh embodiment of the present invention;
Fig.14 is a diagram partially showing a schematic of a radio communication system according to an eighth embodiment of the present invention;
Fig.15 is a schematic diagram to explain a time difference that may cause interference, in case of providing no diversity equalizing parts in the control station;
Fig.16 is a diagram partially showing a schematic of a radio communication system according to a ninth embodiment of the present invention;
Fig.17 is a diagram partially showing a schematic of a radio communication system according to a tenth embodiment of the present invention;
Fig.18 is a diagram showing the case in which plural base stations are connected into a mesh structure;
Fig.19 is a diagram showing the case in which plural base stations are connected into a cluster structure.

### PREFERRED EMBODIMENTS FORCARRYING OUT THE INVENTION

Embodiments of the present invention are described hereinafter with reference to figures.

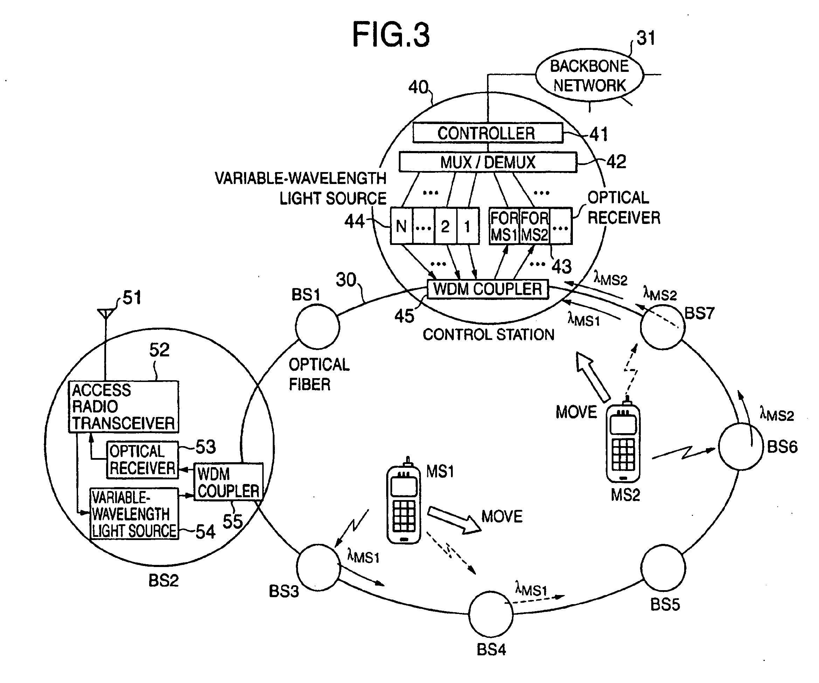

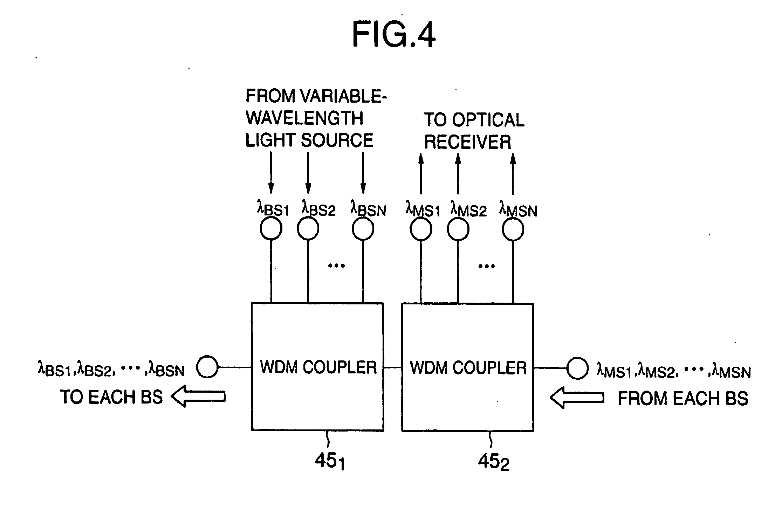

A first embodiment of the present invention is described with reference to Figs.3 and 4.

Fig.3 is a diagram partially showing a schematic of a radio communication system according to the first embodiment of the present invention.

A control station 40 and base stations (BS) are connected in a loop structure by optical fibers in which optical signals are transmitted and received using a wavelength multiplexing transmission method.

In the control station 40, a variable-wavelength light source 44 is provided as an optical transmitter for transmitting each optical wavelength, and each optical signal is combined for wavelength multiplexing transmission and is transmitted to the BS by a WDM coupler 45.

In each of the base stations BS1-7, a WDM coupler 55 splits off a wavelength specific for each base station from others, and an optical receiver 53 then receives the split off wavelength. Signals from the optical receiver 53 are radio-transmitted to radio communication terminals (MS) via an antenna 51 by an access radio (radio communication between the BS and the radio communication terminal) transceiver 52. Radio signals from the radio communication terminal are received by the access radio transceiver 52 via the antenna 51, are converted into optical signals having an arbitrary wavelength by a variable-wavelength light source 54, and are then combined by the WDM coupler 55 for wavelength multiplexing transmission to the control station 40.

In the control station 40, optical signals from each BS are split off into single-wavelength signals by the WDM coupler 45, and then respectively received by an optical receiver 43.

When the MS1 is communicating with the BS3, the BS3 uses a wavelength λ_{MS1} for transmitting the received information from the MS1 to the control station. Then, when the MS1 moves and commences to communicate with the BS4, since the BS4 changes an output wavelength of the variable-wavelength light source 54 into the wavelength λ_{MS1}, and transmits signals thereafter, the control station 40 can continue receiving signals having the wavelength λ _{MS1} without any switching operation. The MS1 thus achieves a switching of base stations from the BS3 to the BS4.

Fig.4 is a diagram showing an example of the WDM coupler in the control station according to the first embodiment.

In a WDM coupler 45₂, signals having wavelengths λ_{MS1}-λ_{MSN} received from each BS are split off and distributed into different terminals by wavelength, and then respectively received by the optical receiver 43.

In this embodiment, therefore, when the switching of base stations occurs due to a movement of the MS, since, in respect of this MS, the wavelength of optical signals from the BS is not changed, and in the control station, the optical signals are outputted from the identical terminal, the control station can continue to receive these optical signals with the identical optical receiver 43 and can dispense with any switching operations.

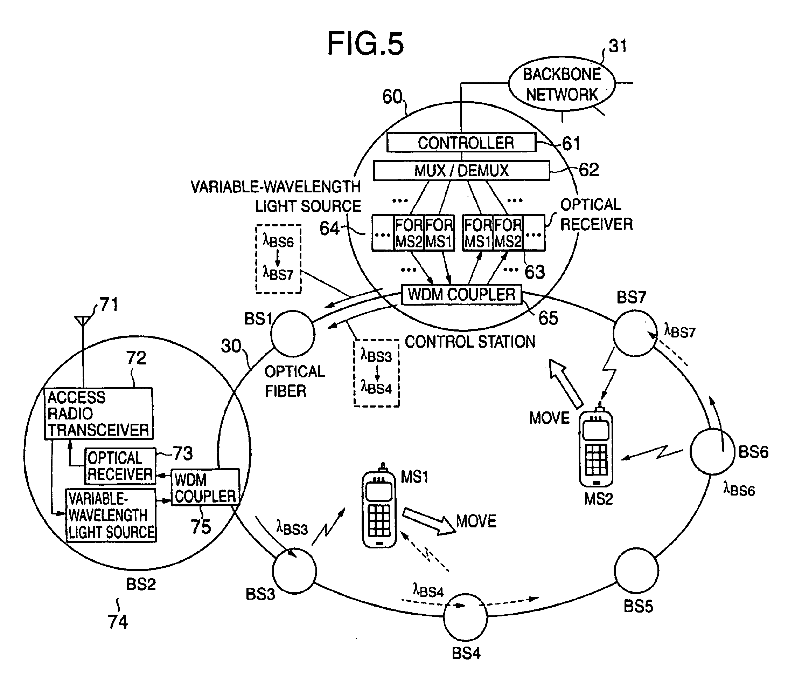

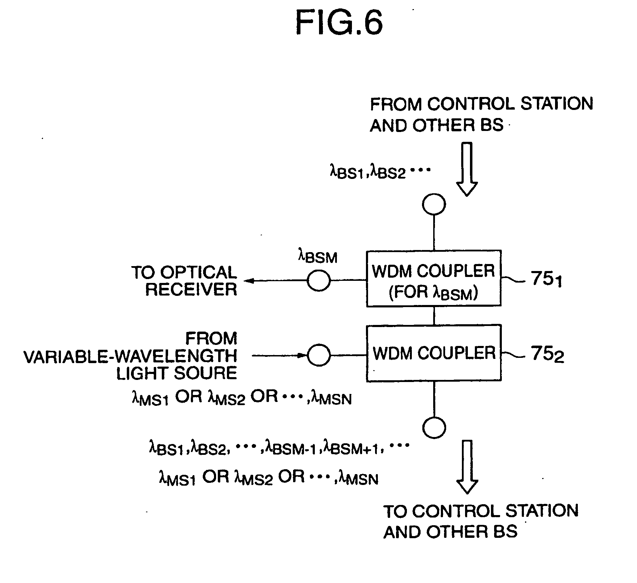

A second embodiment of the present invention is described with reference to Figs. 5 and 6.

Fig.5 is a diagram partially showing a schematic of a radio communication system according to the second embodiment of the present invention.

A control station 60 and base stations (BS) are connected in a loop structure by the optical fibers 30.

In the control station 60, there is provided a variable-wavelength light source 64 that can vary a wavelength for transmission, and each optical signal is combined for wavelength multiplexing transmission and is then transmitted to the BS by a WDM coupler 65.

In each of base stations BS1-7, a WDM coupler 75 splits off a wavelength specific for each base station from others, and an optical receiver 73 then receives the split off wavelength. Signals from the optical receiver 73 are radio-transmitted to radio communication terminals (MS) via an antenna 71 by an access radio transceiver 72. Radio signals from the radio communication terminal are received by the access radio transceiver 72 via the antenna 71, are converted into optical signals having an arbitrary wavelength by a variable-wavelength light source 74, and are then combined by the WDM coupler 75 for wavelength multiplexing transmission.

In the control station 60, optical signals from each BS are split off into single-wavelength signals by the WDM coupler 65, and are then received by an optical receiver 63.

When the MS1 is communicating with the BS3, communication information is transmitted from the control station 60 to the BS3 with a wavelength λ _{BS3}. Then, when the MS moves and commences to communicate with the BS4, the control station 60 achieves a switching of base stations by changing a wavelength of the variable-wavelength light source from λ_{BS3} to λ_{BS4} and then transmitting with the wavelength λ_{BS4}. The control station 80 thus achieves the switching of BS by merely controlling the wavelength of the variable-wavelength light source.

Fig.6 is a diagram showing an example of the WDM coupler in the BS according to the second embodiment.

In a WDM coupler 75₁, among signals having wavelengths λ_{BS1}-λ_{BSN} received from the control station 60 or the other BS, only optical signals having a wavelength that is a specific wavelength λ_{BSM} assigned for that BS are split off and others are to be passed through. Signals from the variable-wavelength light source in BS are combined for wavelength multiplexing transmission.

Therefore, when the MS1 switches a base station to be communicated with from the BS3 to the BS4, the control station 60 changes the wavelength of the variable-wavelength light source from λ_{BS3} to λ_{BS4} for transmission of information of that communication, and then transmits signals with the wavelength λ_{BS4} in order to achieve a switching of BS.

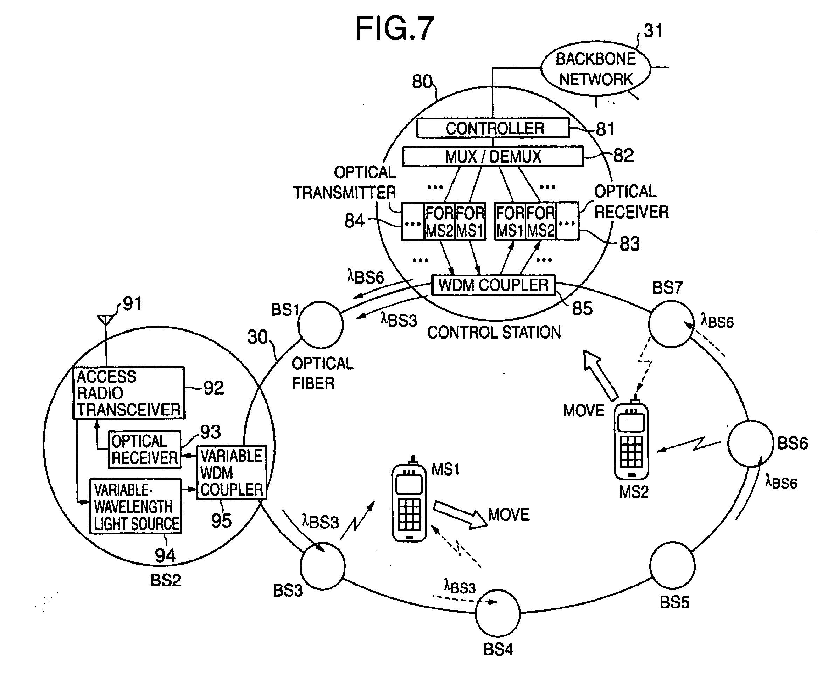

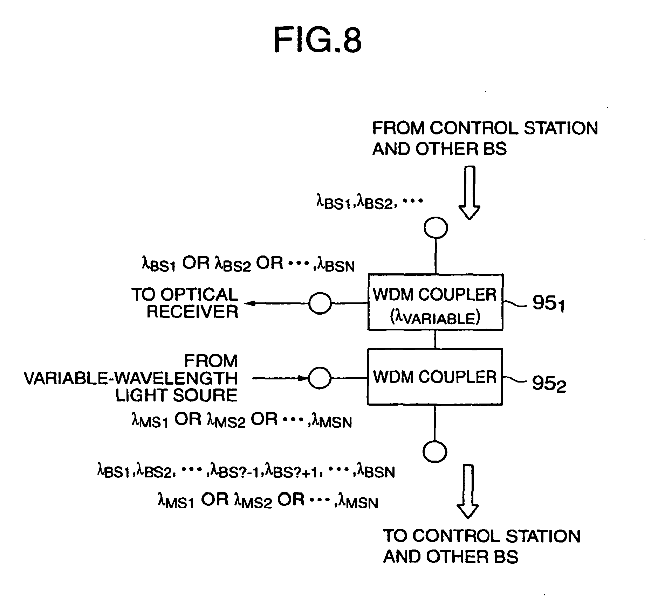

A third embodiment of the present invention is described with reference to Figs.7 and 8.

Fig.7 is a diagram partially showing a schematic of a radio communication system according to the third embodiment of the present invention.

A control station 80 and base stations (BS) are connected in a loop structure by the optical fibers 30 in which optical signals are transmitted and received using the wavelength multiplexing transmission method.

In the control station 80, there is provided with an optical transmitter 84 that transmits each optical wavelength, and each optical signal is combined for wavelength multiplexing transmission and is then transmitted to the BS by a WDM coupler 85.

The light sources for transmission in the optical transmitter 84 are here provided for each MS. For example, when the MS1 commences to communicate with the BS3, a wavelength of the light source for transmission in the MS1 is set to the wavelength λ_{BS3}.

In each of BS1-7, a variable WDM coupler 95 splits off an optical signal having an arbitrary wavelength from others, and an optical receiver 93 then receives the optical signal. Signals from the optical receiver 93 are radio-transmitted to radio communication terminals (MS) via an antenna 91 by an access radio transceiver 92.

Radio signals from the radio communication terminal are received by the access radio transceiver 92 via the antenna 91, are converted into optical signals having a predetermined wavelength by a variable-wavelength light source 94, and are then combined by the WDM coupler 95 for wavelength multiplexing transmission. The variable-wavelength light source 94 is a light source that can optionally control a wavelength outputted from the light source.

In the control station 80, optical signals from each BS are split off into single-wavelength signals by the WDM coupler 85, and are then received by an optical receiver 83.

When the MS1 is communicating with the BS3, communication information is transmitted from the control station to the BS3 with the wavelength λ _{BS3}. Then, when the MS moves and commences to communicate with the BS4, the control station 80 does not change a wavelength for transmission intended for use by the BS. That is, even when the radio communication terminal changes the base station to be communicated with, the control station still uses the wavelength λ_{BS3} that is the wavelength of optical signals intended for use by the base station which communicates with the MS before the movement of the MS.

At the same time, the BS4 splits off signals intended for the MS1 transmitted from the control station 80 with the wavelength λ_{BS3}, from other signals by the variable WDM coupler 85, receives them with the optical receiver 93, and then radio-transmits them to the MS1 via the antenna 91 by the access radio transceiver 92.

Thus, the control station 80 can continue communicating with the MS1 without switching an optical transmitter or any other operation of controlling wavelengths, and can achieve a switching of BS.

Fig.8 is a diagram showing an example of the WDM coupler in BS according to the third embodiment.

In a WDM coupler 95₁, among optical signals having wavelengths λ_{BS1}-λ_{BSN} received from the control station 80 or the other BS, only predetermined optical signals having a wavelength λ_{BSM} are split off, and the others are to be passed through. Signals from the variable-wavelength light source 94 in the BS are combined by a WDM coupler 95₂ for wavelength multiplexing transmission.

Therefore, when the MS1 switches a base station to be communicated with from the BS3 to the BS4, the wavelength split off by the variable WDM coupler in the BS4 is changed into the wavelength λ_{BS3}, whereby optical signals from the control station 80 are transmitted to the BS4 so that a switching of BS is achieved.

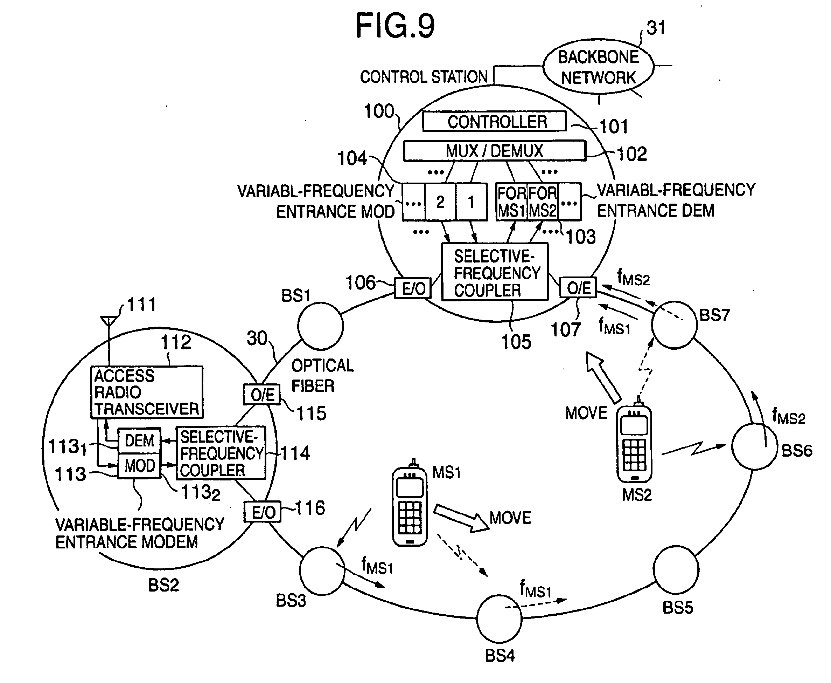

A fourth embodiment of the present invention is described with reference to Fig.9.

Fig.9 is a diagram partially showing a schematic of a radio communication system according to the fourth embodiment of the present invention.

A control station 100 and base stations (BS) are connected in a loop structure by the optical fibers 30.

In the control station 100, signals that are split off by an MUX/DEMUX 102 are converted into entrance radio signals by a variable-frequency entrance MOD 104, are frequency-multiplexed by a selective-frequency coupler 105, and are then transmitted to the BS by an E/O 106 using the sub-carrier transmission method.

In each of BS1-7, the transmitted signals are converted into frequency-multiplexed radio signals by each O/E 115, and a predetermined entrance radio frequency signal is split off from the frequency-multiplexed radio signals by a selective-frequency coupler 114. The signal split off is demodulated by a variable-frequency entrance DEM 113₁ (here, a variable-frequency entrance MODEM 113 includes the variable-frequency entrance DEM 113₁ for demodulating and a variable-frequency entrance MOD 113₂ for modulating). Digital signals demodulated by the variable-frequency entrance MOD 113₁ are converted into radio frequency signals intended for the radio communication terminals and are then radio-transmitted to the radio communication terminal (MS) via an antenna 111 by an access radio transceiver 112.

Radio signals from the radio communication terminal are received by the access radio transceiver 112 via the antenna 111, and are then converted into digital signals. The digital signals are then converted into the entrance radio signals having a frequency f_{MS1}, by the variable-frequency entrance MOD 113₂. The output signals are multiplexed by the selective-frequency coupler 114 and are then transmitted to the control station or the other BS by an E/O 116 on the sub-carrier transmission.

In the control station 100, optical signals from each BS are converted into frequency-multiplexed radio signals by the O/E 107. The converted signals are split off into single-wavelength signals by the selective-frequency coupler 105. Each single-wavelength signal is demodulated into a digital signal by the variable-frequency entrance DEM 103.

When the MS1 is communicating with the BS3, the BS3 modulates information from the MS1 with a variable-frequency entrance radio signal having the frequency f_{MS1}, and then transmits the modulated signal to the control station 100 on the sub-carrier transmission.

Then, when the MS1 moves and commences to communicate with the BS4, the BS4 controls a carrier (that is the entrance radio frequency) of the variable-frequency entrance MOD 113₂, modulates information from the MS1 with the entrance radio frequency having the frequency f_{MS1}, and then transmits the modulated signal to the control station 100 on the sub-carrier optical transmission. The control station 100 still uses the same entrance radio frequency f_{MS1} for receiving, whereby the control station can continue receiving the signals from the MS1.

The switching of base stations from the BS3 to the BS4 in respect of the MS1 is thus achieved.

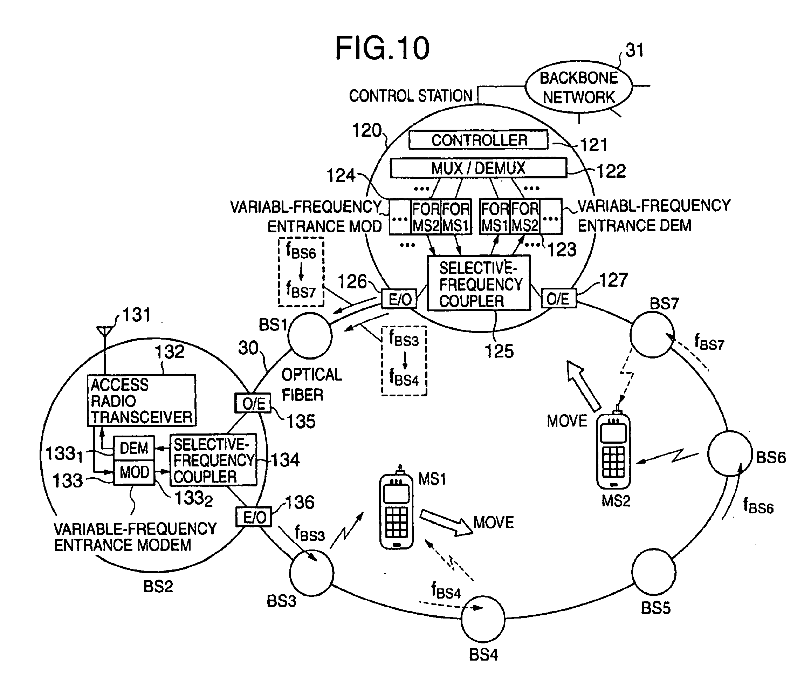

A fifth embodiment of the present invention is described with reference to Fig.10.

Fig.10 is a diagram partially showing a schematic of a radio communication system according to the fifth embodiment of the present invention.

A control station 120 and base stations (BS) are connected in a loop structure by the optical fibers 30.

In the control station 120, signals that are split off by an MUX/DEMUX 122 are modulated into entrance radio signals (with frequencies f_{BS1}-f_{BSN}) by a variable-frequency entrance MOD 124, are frequency-multiplexed by a selective-frequency coupler 125, and are then transmitted to each BS by an E/O 126 using the sub-carrier transmission method.

In each of BS1-7, the transmitted signals are converted into frequency-multiplexed radio signals by each O/E 135, and a signal having a frequency specific for each BS is split off from the converted signals by a selective-frequency coupler 114. The signal split off is demodulated by a variable-frequency entrance DEM 133₁ (here, a variable-frequency entrance MODEM 133 includes the variable-frequency entrance DEM 133₁ for demodulating and a variable-frequency entrance MOD 133₂ for modulating). Digital signals demodulated by the variable-frequency entrance DEM 113₁ are radio-transmitted to the radio communication terminal (MS) via an antenna 131 by an access radio transceiver 132. Radio signals from the radio communication terminal are received by the access radio transceiver 132 via the antenna 131, and are then converted into digital signals. The digital signals are then modulated into the entrance radio signals by the variable-frequency entrance MOD 133₂. The output signals are frequency-multiplexed by the selective-frequency coupler 134, and are then transmitted to the control station 120 or the other BS by an E/O 127 using the sub-carrier transmission method.

In the control station 120, optical signals from each BS are converted into frequency-multiplexed radio signals by the O/E 127. The converted signals are split off into single-wavelength signals by the selective-frequency coupler 125. Each single-wavelength signal is demodulated into a digital signal by the variable-frequency entrance DEM 123.

When the MS1 is communicating with the BS3, the control station 120 modulates the information with an entrance radio signal having the frequency f_{BS3}, and then transmits the modulated signal to the BS3 on the sub-carrier transmission.

Then, when the MS1 moves and commences to communicate with the BS4, the control station 120 controls a carrier (that is the entrance radio frequency) of the variable-frequency entrance MOD 124, converts the entrance radio frequency having the frequency f_{BS3} into the entrance radio frequency having the frequency f_{BS4}, and then transmits the converted signal to the BS4 using the sub-carrier optical transmission method. Thus, the control station 120 controls a carrier of the variable-frequency entrance MOD 124 so that the control station can change a destination of signals from the BS3 to the BS4, that is, the switching of base stations is achieved.

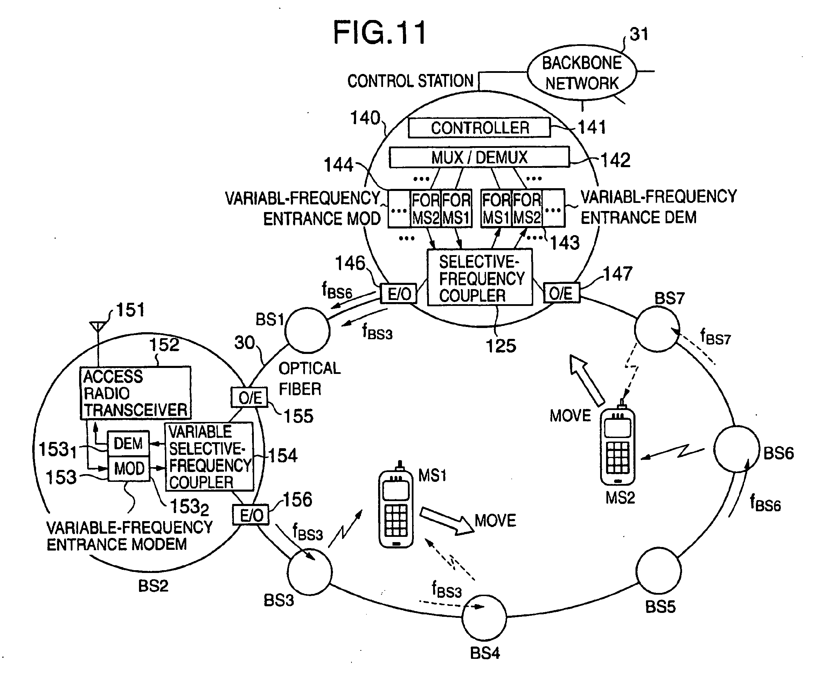

A sixth embodiment of the present invention is described with reference to Fig.11.

Fig.11 is a diagram partially showing a schematic of a radio communication system according to the sixth embodiment of the present invention.

A control station 140 and base stations (BS) are connected into a loop structure by the optical fibers 30.

In the control station 140, signals that are split off by an MUX/DEMUX 142 are modulated into entrance radio signals (with frequencies f_{BS1}-f_{BSN}) by a variable-frequency entrance MOD 144, are frequency-multiplexed by a selective-frequency coupler 145, and are then transmitted to each BS by an E/O 146 using the sub-carrier transmission method.

In each of BS1-7, the transmitted signals are converted into frequency-multiplexed radio signals by each O/E 155, and a signal having a predetermined frequency is split off from the converted signals by a selective-frequency coupler 154. The signal split off is demodulated by a variable-frequency entrance DEM 153₁ (here, a variable-frequency entrance MODEM 153 includes the variable-frequency entrance DEM 153₁ for demodulating and a variable-frequency entrance MOD 153₂ for modulating). Digital signals demodulated by the variable-frequency entrance DEM 153₁ are radio-transmitted to a radio communication terminal (MS) via an antenna 151 by an access radio transceiver 152.

Radio signals from the radio communication terminal are received by the access radio transceiver 152 via the antenna 151, and are then converted into digital signals. The digital signals are then converted into the entrance radio signals by the variable-frequency entrance MOD 153₂. The output signals are multiplexed by the selective-frequency coupler 154, and are then transmitted to the control station 120 or the other BS by an E/O 156 on the sub-carrier transmission.

In the control station 140, optical signals from each BS are converted into frequency-multiplexed radio signals by the O/E 147. The converted signals are split off into single-wavelength signals by the selective-frequency coupler 145. Each single-wavelength signal is demodulated into a digital signal by the variable-frequency entrance DEM 143.

When the MS1 is communicating with the BS3, the control station 140 modulates the information with an entrance radio signal having the frequency f_{BS3}, and then transmits the modulated signal to the BS3 on the sub-carrier transmission.

Then, even when the MS1 moves and commences to communicate with the BS4, the control station 140 still uses the entrance radio frequency having the frequency f_{BS3} for transmitting using the sub-carrier optical transmission method. At the same time, the BS4 controls the variable selective-frequency coupler 154 such that the BS4 uses the frequency f_{BS3} for splitting off, and then receives the entrance radio signal having the frequency f_{BS3} from the control station 140. Thus, without any operation on switching of frequencies, the control station can change the destination of signals from the BS3 to the BS4, and the switching of BS is achieved.

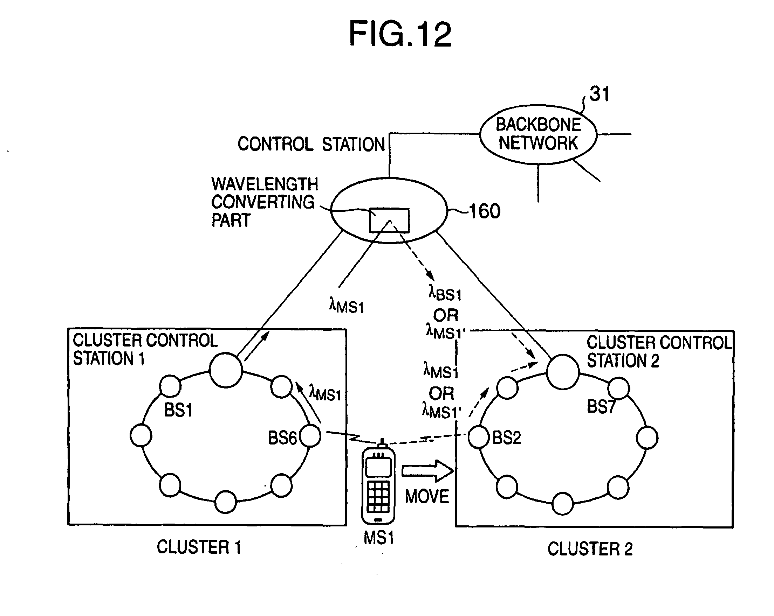

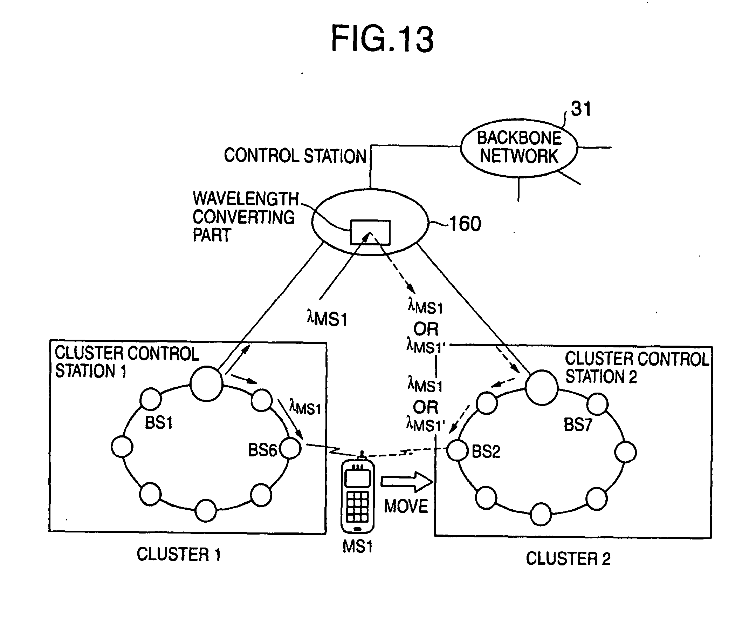

A seventh embodiment of the present invention is described with reference to Figs.12 and 13.

Figs.12 and 13 are diagrams partially showing schematics of a radio communication system according to the seventh embodiment of the present invention.

This embodiment shows the case that the radio communication terminal moves from the Cluster 1 to the Cluster 2 over the communication network organized into a cluster structure, and Fig.12 and 13 show the aspects of uplink and downlink controls, respectively.

In Fig.12, when the MS1 is communicating with the BS6, the BS6 transmits information from the MS1 to a cluster control station 1 with the wavelength λ_{MS1}.

Then, when the MS1 moves and changes a cluster in order to commence to communicate with the BS2, in this embodiment, the cluster control station 1 in the Cluster 1 then transmits signals sent from the MS1 and intended for the cluster control station 2 in the Cluster 2 to the control station 160 with the same wavelength λ_{MS1} as one used by the BS6 for transmitting before the movement of the MS1.

When the wavelength λ_{MS1} is not being used in the Cluster 2, the control station 160 then relays and transmits signals sent from the MS1 and carried on the wavelength λ_{MS1} from the cluster control station 1 to the cluster control station 2 without converting of wavelengths.

When the wavelength λ_{MS1} is being used in the Cluster 2, the control station 160 then converts the wavelength λ_{MS1} sent from the cluster control station 1 into a wavelength λ_{MS1}, that is not used in the Cluster 2, and then transmits the converted signals to the cluster control station 2.

Then, in the Cluster 2 that the MS1 moves into, the BS2 transmits signals sent from the MS1 to the cluster control station 2 with the same wavelength λ_{MS1} as one used by the BS6 in Cluster 1 for transmitting to the cluster control station 1 before the movement of the MS1. In the case that the wavelength λ_{MS1} is being used in the Cluster 2, the BS2 in the Cluster 2 transmits the signals to the cluster control station 2 with the wavelength λ_{MS1}. that is not being used in the Cluster 2.

The radio communication terminal can thus switch of clusters and of base stations, with achieve a seamless handover between clusters.

In Fig.13, when the MS1 is communicating with the BS6 in the Cluster 1, the BS6 receives information from the cluster control station 1 with the wavelength λ_{MS1}.

Then, when the MS1 moves and changes a cluster in order to commence to communicate with the BS2 in the Cluster 2, in this embodiment, the cluster control station 1 in the Cluster 1 then transmits signals intended for the MS1 to the BS2 in the Cluster 2 via the control station 160 with the same wavelength λ_{MS1} as one used by the cluster control station 1 for transmitting to the BS6 before the movement of the MS1.

When the wavelength λ_{MS1} is not being used in the Cluster 2, the control station 160 then relays and transmits signals sent from MS1 and carried on the wavelength λ_{MS1} from the cluster control station 1 to the cluster control station 2 without converting of wavelengths.

When the wavelength λ_{MS1} is being used in the Cluster 2, the control station 160 then converts the wavelength λ_{MS1} sent from the cluster control station 1 into the wavelength λ_{MS1}. that is not being used in the Cluster 2, and then transmits the converted signals to the cluster control station 2.

The cluster control station 2 then transmits signals intended for the MS1 with the wavelength λ_{MS1} or λ_{MS1}, to the BS2 with which the MS1 is currently communicating. The BS2 then converts the received signals into signals having the access radio (a radio communication between the BS and the radio communication terminal) frequency, and then radio-transmits the converted signals to the MS1.

The radio communication terminal can thus switch of clusters and of base stations, with a seamless handover between clusters.

Although, in the context of the above-mentioned embodiments 1-7, the WDM couplers are described to include a coupler for combining and a coupler for splitting off in some cases (for example, Fig.4, Fig.6, and Fig.8), it is an exemplified description to emphasize a function to combine and a function to split off, and a single WDM coupler provided with these two functions can be employed.

Also, a plurality of base stations and a control station that controls the plurality of base stations may be connected with the sub-carrier optical transmission with the radio signals for mobile communication instead of the entrance radio signals.

As described above, according to the embodiments 1-7 of the present invention, in the network system of radio base stations in which the plurality of base stations and the control station that controls those base stations are connected using the wavelength multiplexing transmission method, a wavelength is assigned to a communication between the base station and the radio communication terminal, and when the mobile terminal moves and the switching of base stations arises, wavelengths used for transmission of information in base stations and control stations are controlled so that the control station can dispense with any operation of switching, resulting in a simplified control operation.

Also, by applying sub-carrier optical transmission to control frequencies of sub-carriers on this network system of radio base stations, the same effect is obtained.

Further, by applying these embodiments of the present invention to a network organized into a cluster structure, a highly scalable network system of radio base stations is achieved, and the radio communication terminals can roam among the clusters.

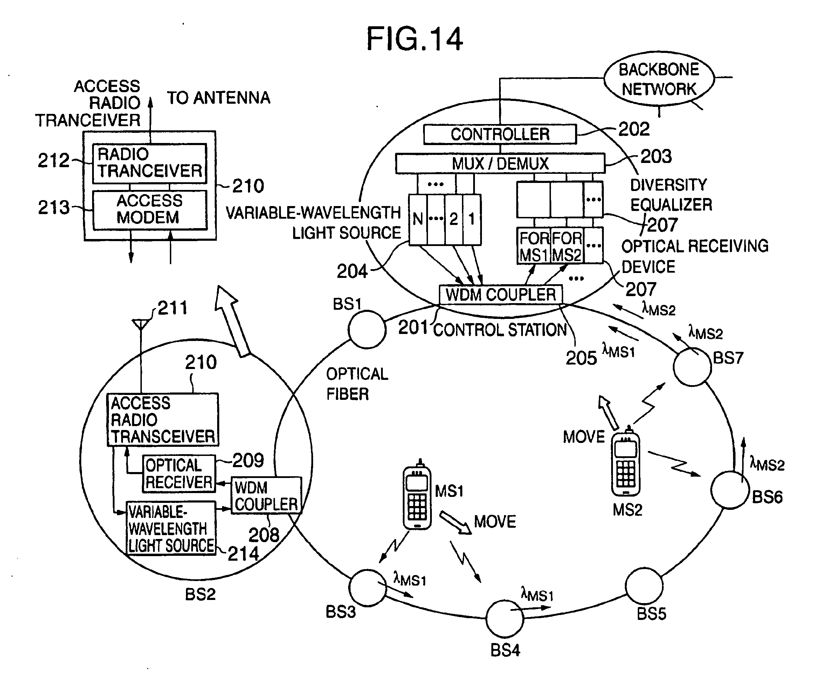

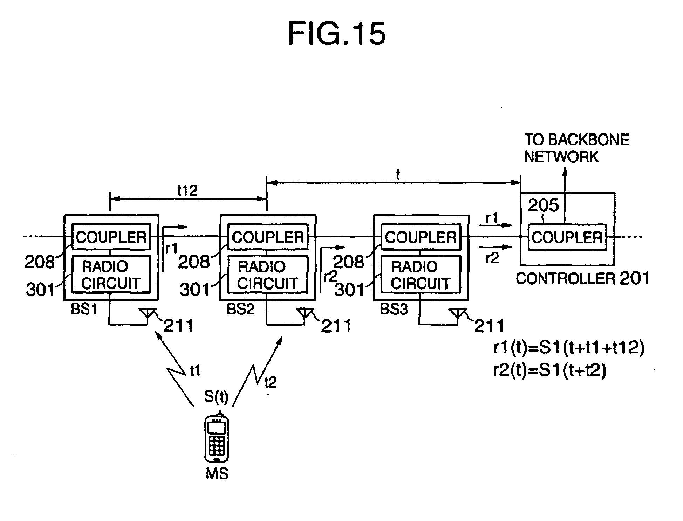

An eighth embodiment of the present invention is described with reference to Figs.14 and 15. Fig.14 is a diagram partially showing a schematic of a radio communication system according to the eighth embodiment of the present invention.

During performing soft handover, a signal sent from a single mobile station is converted into two respective optical signals independently at two base stations. The control station receives and monitors those two optical signals in order to achieve handover. According to the above-mentioned embodiments 1-7, although these two optical signals arrive at the control station 201 at different times depending on at which base station they are converted, these two optical signals are received at the same receiver in the control station since they have the same wavelength. This might cause interference between these signals and make it difficult to establish communications. In this embodiment, therefore, a process of equalization is performed in a subsequent stage of the optical receiving device.

In Fig.14, a control station 201 and a plurality of base stations (referred to as BS1-BS7 hereinafter, as an example) are connected in a loop structure by optical fiber cables. The WDM is applied here, for example. The base station is provided in each cell and controls radio communications with radio communication terminals that are located within each cell. Any type of optical fibers or any optical fibers with arbitrary performance may be used, and any interval between base stations may be employed. Also, it is assumed that the control station and each base station mutually communicate in optical signals using the wavelength multiplexing transmission method.

The control station 201 includes a controller 202, an MUX/DEMUX 203, a variable-wavelength light source 204, a WDM coupler 205, an optical receiving device 206, and a diversity equalizer 207.

The controller 202 controls communications between the network of the base stations (BS1-BS7) that are managed by the control station 201 and the external communication network (that is the backbone network).

The MUX/DEMUX 203 splits off multiplexed signals received from the backbone network, and multiplexes signals to be transmitted to the backbone network.

The variable-wavelength light source 204 (supporting N types of wavelengths 1-N) converts an electric signal to be transmitted into an optical signal having a wavelength specific for each destination mobile station. It is here assumed that a single wavelength is assigned to each mobile station, and the variable-wavelength light source is also provided to accommodate each wavelength, that is, the variable-wavelength light source is provided to meet the supposed maximum number of mobile stations that can be accepted.

The WDM coupler 205 combines optical signals to be transmitted having different wavelengths, and splits off a received combined optical signal into single-wavelength optical signals split off by wavelength.

The optical receiving device 206 that includes a plurality of optical receivers receives and converts the single-wavelength optical signals split off by wavelength into electric signals. It is here assumed that a single wavelength is assigned to each mobile station, and the optical receiving device is also provided for each wavelength, that is, the optical receiving device is provided to meet the supposed maximum number of mobile stations that can be accepted. In other words, optical signals that are converted from signals transmitted from an identical mobile station are converted into electric signals by an identical receiver, irrespective of which base station transmits each of those optical signals.

The diversity equalizer 207 is provided subsequently to the optical receiving device 206. Among signals received and converted into electric signals, the diversity equalizer 207 combines only signals that are sent from an identical mobile station, that is, that have the same wavelength at the input stage of the control station 201, in order to equalize the received signals having arrived at different times.

Taking the base station BS2 as an example, a configuration of each base station is then described. It is assumed that every base station has the same configuration. Each base station has a WDM coupler 208, an optical receiver 209, an access radio transceiver 210, an antenna 211, a radio transceiver 212, an access MODEM 213, and a variable-wavelength light source 214.

The WDM coupler 208 splits off and takes in an optical signal having a wavelength specific for the base station among the combined optical signals transmitted from the control station 201, and combines optical signals to be transmitted to the control station 201.

The optical receiver 209 receives optical signals taken into by the WDM coupler 208, and then converts them into electric signals.

The access radio transceiver 210 includes a radio transceiver 212 radio-communicating with the mobile stations via the antenna 211, and an access MODEM 213 modulating and demodulating the received signals and the signals to be transmitted.

The variable-wavelength light source 214 receives electric signals received from the mobile station and then converts them into optical signals having a wavelength specific for that mobile station.

Before describing the operation of the above-mentioned configuration, the above-mentioned interference that may occur during handover is described. Fig.15 is a schematic diagram to explain the time difference that may cause interference, in case of not providing diversity equalizing parts in the control station. In Fig.15, for simplicity, it is assumed that the mobile station MS is under handover between the base station BS1 and the base station BS2. In case of mobile stations communicating via the base station BS1, that communication continues through the base station BS2 and the base station BS3 (hereinafter, referred to as a route r1) to arrive at the control station 201. In case of mobile stations communicating via the base station BS2, that communication continues through the base station BS3 (hereinafter, referred to as a route r2) to arrive at the control station 201.

The control station 201 receives signals passed through the route r1 and signals passed through the route r2 at the same time, and monitors and compares the quality of both connections in order to perform handover.

For simplifying here, in Fig.15 a radio circuit part 301 comprehensively represents components necessary for transmitting and receiving signals, except the coupler 208 and the antenna 211 in the base stations BS1-BS3.

As described in Fig. 15, it is assumed here that t1 represents a time required for transferring signals from the mobile station MS to the base station BS1, t2 represents a time required for transferring signals from the mobile station MS to the base station BS2, t12 represents a time required for transferring signals from the base station BS1 to the base station BS2 via the route r1, and t represents a time required for transferring signals from the base station BS2 to the control station 201 via the routes r1 and r2, whereby a total time required for transferring via the route r1 equals to t+t1+t12, and a total time required for transferring via the route r2 equals to t+t2.

Therefore, even though transmitted from the same mobile station MS, a time lag Δ t=| (tl+t12)-t2 | arises for arrival at the control station 201 between the signals via the route r1 and the signals via the route r2.

The times required to transfer t1, t2, and t12 are values that always vary because of the position of the mobile station MS, the condition of installation of the base station BS, and any other factors of a communication environment. Therefore, it is difficult to accomplish the above time-adjustment.

As described above, since both signals routed in the route r1 and the route r2 have the same wavelength, those signals interfere with each other at the optical receiver in the control station as the result of the above-mentioned time lag. Therefore, even though soft handover is achieved by receiving the signal via the route r1 and the signal via the route r2 at the same time and monitoring the quality of connections, establishing and maintaining communication during performing a soft handover may be difficult.

The diversity equaling part 207 is provided to avoid such difficulties from arising. When optical signals having the same wavelength are received, after these signals are converted into electric signals by the optical receiving device 206, the diversity equaling part 207 equalizes the converted received signals. Since all signals including the delayed waves are equalized by this process, the above-mentioned interference is avoided, and the diversity effect is obtained, whereby the quality of connection increases.

The operation of the radio communication system shown in Fig.14 will now be then described. It is assumed here that there are the mobile stations MS1 and MS2, and the wavelength λ_{MS1} is assigned to the mobile station MS1 as the wavelength specific for the MS1 and the wavelength λ_{MS2} is assigned to the mobile station MS2 as the wavelength specific for the MS2.

It is assumed now that the mobile station MS1 is located in a cell under control of the base station BS3. A signal transmitted for the mobile station MS1 via the backbone network is firstly received by the controller 202 in the control station 201, and is then fed to the MUX/DEMUX 203.

The transmission signal intended for the mobile station MS1 is then split off by the MUX/DEMUX 203, and is converted into the optical signal having the wavelength λ_{MS1} by the variable-wavelength optical source 204.

The transmission signal intended for the mobile station MS1 is then combined with signals having other wavelengths by the WDM coupler 205, and is transmitted by the control station 201.

The transmission signals for the mobile station MS1 that are passed thus through the network of radio base stations are split off and taken into the WDM coupler 208 in the base station BS3.

Then, the transmission signals intended for the mobile station MS1 are converted into electrical signals by the optical receiver 209, are modulated by the access MODEM 213 in the access radio transceiver 210, and are then transmitted to the mobile station MS1 via the antenna 211 by the radio transceiver 212.

On the other hand, a signal transmitted from the mobile station MS1 is firstly received by the radio transceiver 212 in the access radio transceiver 210 via the antenna 211 in the base station BS3, is demodulated by the access MODEM 213, and is then transmitted the to variable-wavelength optical source 214.

Then, the transmission signal sent from the mobile station MS1 is converted into an optical signal having the wavelength λ_{MS1} by the variable-wavelength optical source 214, is combined by the WDM coupler 208, and is then transmitted to the control station 201 using the wavelength multiplexing transmission method.

Then, the transmission signal sent from the mobile station MS1 is split off and taken into the WDM coupler 205 in the control station 201.

Then, the transmission signal sent from the mobile station MS1 is converted into an electric signal, and is then transferred to the diversity equalizer 207 by the optical receiver for MS1 in the optical receiving device 206 that is the optical receiver specific for the wavelength λ_{MS1}.

Then, the transmission signal sent from the mobile station MS1 is equalized when there are some components arriving with time differences in the same-wavelength signal, and is then transferred to the MUX/DEMUX 203.

Then, the transmission signal from the mobile station MS1 is multiplexed, and is transferred to the backbone network via the controller 202.

It is here regarded that the mobile station MS1 moves from a cell under control of the base station BS3 to another cell under control of the base station BS4. As described above, during handover, each of the base station BS3 and the base station BS4 converts the signal received from the mobile station MS1 into the optical signal having the wavelength λ_{MS1}, and transfers the optical signal to the control station 201.

The control station 201 near-simultaneously receives signals routed via the base station BS3 and signals routed via the base station BS4, and monitors the quality of both connections.

The optical signal having the wavelength λ_{MS1} transmitted from the base station BS3 and the optical signal having the wavelength λ_{MS1} transmitted from the base station BS4 arrive at the control station 201 with the time difference that always varies, as described above.

All received signals having the wavelength λ_{MS1} are converted into electric signals by the same optical receiver, irrespective of which base station transmits each of those signals.

The converted electric signals received from the mobile station MS1 under handover including the delayed waves are equalized by the diversity equalizer 207, as described above.

Since the signals transmitted from the mobile station MS1 under handover are thus equalized irrespective of through which base station those signals pass, the interference due to the time difference of arrival at the control station can be eliminated, and the effect of diversity can be obtained.

Therefore, during handover of the mobile station, the control station near-simultaneously receives signals transmitted from the mobile stations in order to monitor the condition of connections to perform handover, while signals transmitted from all possible destination base stations of the handover are equalized rather than only a single signal from either of the possible destination base stations being handled as the received signal. Consequently the quality of telephone speech can be retained during the handover, irrespective of the position and the movement of the mobile station and other factors of the communication environment.

Although it is described that the diversity equalizer 207 equalizes all signals transmitted from the mobile station under handover in this context, the diversity equalizer 207 may equalize only chosen signals with the known aspect and method in order to further increase the quality of communication.

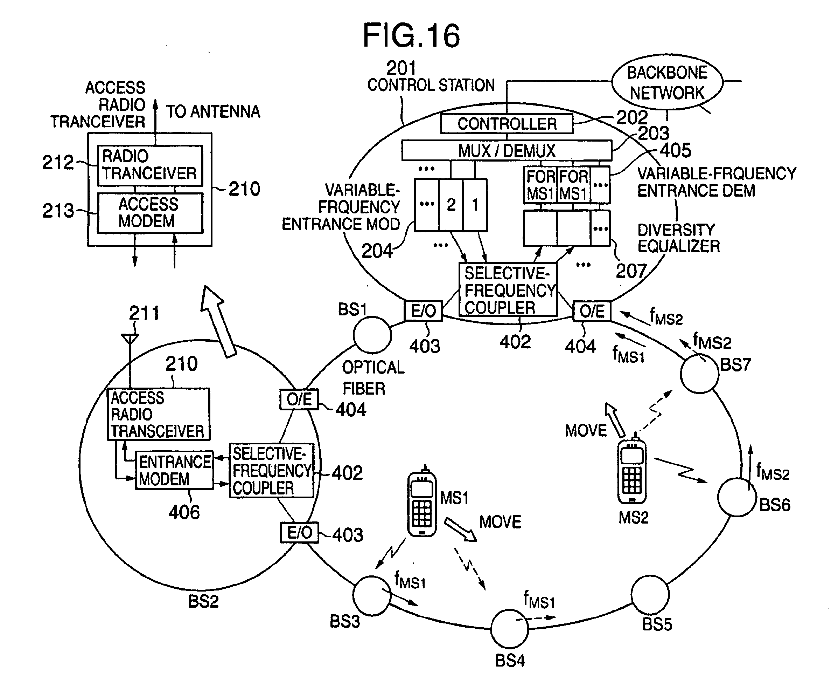

Fig.16 is a diagram partially showing a schematic of a radio communication system according to the ninth embodiment of the present invention. This embodiment has a configuration similar to the one of the configurations according to the eighth embodiment, however this embodiment uses a sub-carrier optical transmission method instead of wavelength multiplexing transmission method as the transmission method in the communication network including the plurality of base stations under control of the control station.

In Fig.16, a variable-wavelength entrance MOD 401 modulates a signal split off by the MUX/DEMUX 203 into an entrance radio signal. In frequencies of the entrance radio signals, a different frequency is assigned to each mobile station. It is here assumed that there are N mobile stations and they respectively employ one of the frequencies f_{MS1}-f_{MSN}.

A selective-frequency coupler 402 frequency-multiplexes the entrance radio signals that are converted such that each converted signal has a different frequency for each destination mobile station, and splits off the signals having the wavelength specific for each base station among the multiplexed signal received and taken into.

An E/O 403 puts the frequency-multiplexed signal onto an optical sub-carrier, and transmits the optical sub-carrier to the communication network using the sub-carrier optical transmission method.

An O/E 404 converts the received optical signal into a frequency-multiplexed radio signal. A variable-wavelength entrance DEM 405 demodulates the entrance radio signal.

The entrance MODEM 406 demodulates the entrance radio signal taken into, and modulates the signal received from the mobile station into the entrance radio signal.

Even though the transmission method is thus switched to the sub-carrier optical transmission method, the process during the handover is not changed, so that by equalizing the received signals with the diversity equalizer 207 after wave-splitting, whereby the effect similar with one of the eighth embodiment is obtained.

Also, the ninth embodiment can be employed with a configuration of the control station and each base station dispending with the optical receivers and the variable-wavelength optical sources so as to obtain a reduction of configuration and/or processing steps.

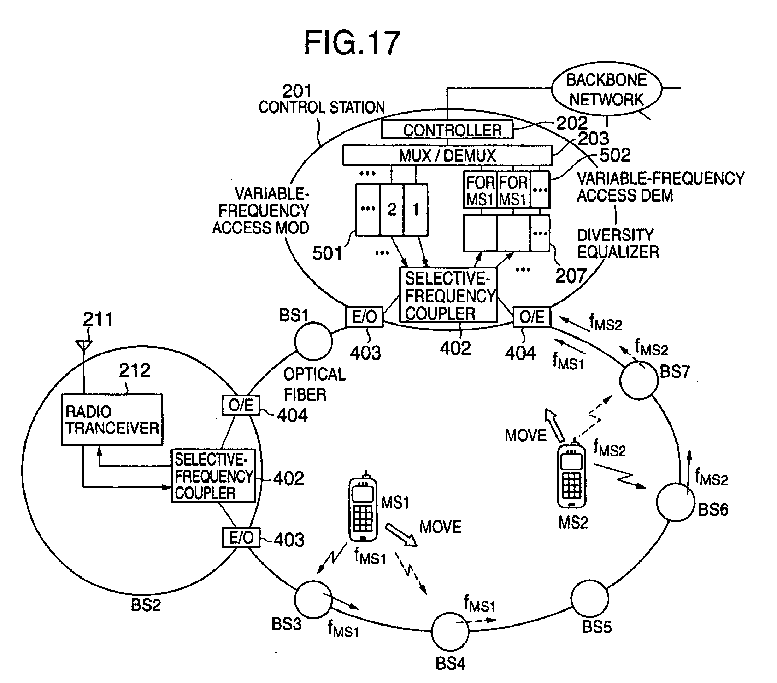

Fig.17 is a diagram partially showing a schematic of the radio communication system according to the tenth embodiment of the present invention. This embodiment has a configuration similar to the configuration of the ninth embodiment, however the tenth embodiment uses the access radio signals instead of the entrance radio signals.

In Fig.17, a variable-frequency MOD 501 modulates the signal split by the MUX/DEMUX 203 into the access radio signal. In frequencies of the access radio signals, a different frequency is assigned to each mobile station. It is here assumed that there are N mobile stations and they respectively employ one of the frequencies f_{MS1}-f_{MSN}. A variable-frequency access DEM 502 demodulates the access radio signal.

In the sub-carrier optical transmission method, the access radio signal used in the radio communication between each base stations and the mobile station is thus utilized for the radio signal at a stage before being carried on the sub-carrier so that it becomes possible for each base station to dispense with the modulator/demodulator for the access radio signal, and further reduction of configuration and/or processing steps in the base station can be obtained than in the eleventh embodiment. It is also clear that an effect similar to the one of the eighth embodiment can be obtained as well.

Although the case is described to frequency-multiplex the signals to be carried on the optical sub-carrier (that is FDMA) in the contexts of the ninth and tenth embodiments, other methods, for example, time-division multiplexing (TDMA), code division multiplexing (CDMA), can be used. In those cases, the splitting part in the control station and each base station would be a corresponding one for the method used.

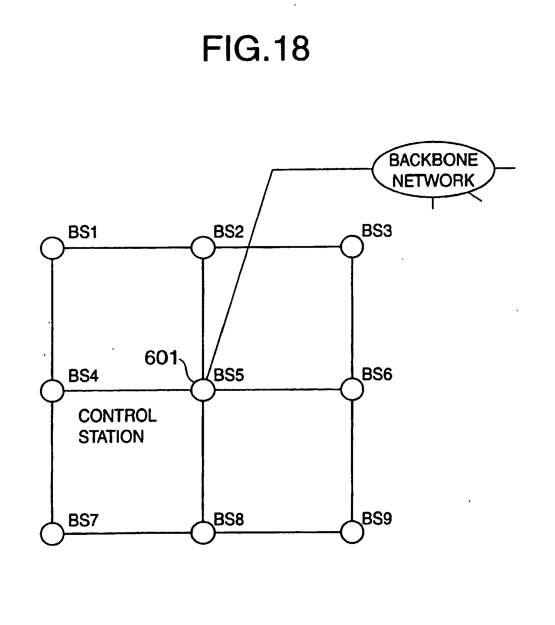

Also, although the case is mainly described that the plurality of base stations are connected in the loop structure in the communication network under control of the control station in the context of the above-mentioned embodiments, the base station network according to the present invention can be organized into a mesh structure as shown in Fig.18 and into a cluster structure as shown in

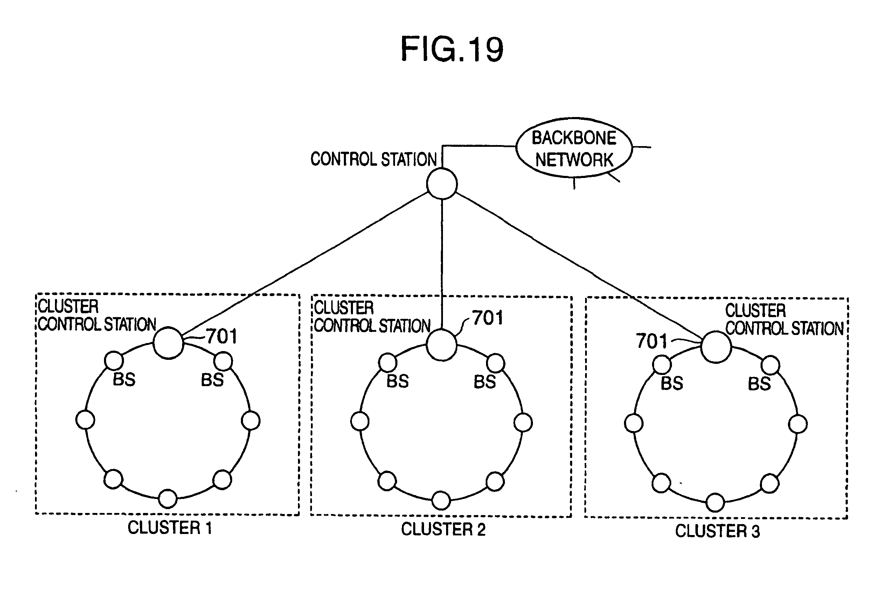

Fig.19, as well as the examples shown in the seventh embodiment.

In the case of Fig.18, the base station BS5 become a control station 601, while, in the case of Fig.19, there is a cluster control stations 701 respectively controlling each cluster and a control station 702 controlling the plurality of cluster control stations 701. Each control station corresponds to the control station described in the eighth to tenth embodiments.

Further, although, in the context of all the above-mentioned embodiments, performing handover is limited to the example of a radio communication terminal that is a mobile station, other communication terminals communicating with the network of radio base stations directly or via the external communication network connected with the radio base station network through the control station are not limited to the mobile radio terminals and may be stationary wired terminals such as personal computers, mobile wired terminals such as PDAs, and stationary wireless terminals such as wireless LANs.

Furthermore, although in the contexts of all the above-mentioned embodiments, the WDM coupler is described as an example of the device for splitting and combining the optical signals, these embodiments are not limited to the WDM coupler, and the present invention can employ any other devices that can split and combine the optical signals by wavelength and can have an arbitrary configuration and form. The present invention can employ for example a device comprising a variable-wavelength filter such as OADM (Optical Add-Drop Multiplexer), or AOTF (Acoustic Optical Tunable Filter).

As described above, according to the base station network of the present invention, the wavelength of the optical signal transmitted from the base station through the optical fiber cable to the control station is specific for each mobile station, so that, although the mobile station is under handover, the control station can receive all that mobile station's transmissions with the single optical receiver. Therefore, by having a configuration dispensing with the selective switch compared to the prior art, it becomes possible to reduce configuration and processing steps.

Also, in the control station, the equalizing part is provided at the subsequent stage of the optical receiver, so that, when the control station receives the optical signals having the same wavelength from the different base stations, it becomes possible to avoid those signals interfering with each other, to obtain the effect of diversity, and to increase the quality of communication during the soft handover of the mobile station.

## Claims

1. A network system of radio base stations comprising base stations (BS) provided in a plurality of cells and a control station (40) controlling the base stations, in which the base stations and the control station are connected by optical fibers using a wavelength multiplexing transmission method, wherein:
the base station comprises a variable-wavelength transmitter (54) for transmitting an optical signal having a predetermined wavelength, and an optical coupler (55) for combining optical signals from the variable-wavelength transmitter in order to transmit the optical signals using the wavelength multiplexing transmission method;
the control station comprises a plurality of optical receivers (43) for receiving wavelengths of the optical signals transmitted using the wavelength multiplexing transmission method, and an optical coupler (45) for splitting the wavelength-multiplexed optical signals transmitted from the base stations to the optical receivers by wavelength;
**characterised in that** when the radio communication terminal (MS) communicating with the base station moves and changes the base station to communicate with, a new base station which communicates with the radio communication terminal after a movement of the radio communication terminal controls the wavelength of the variable-wavelength transmitter, and then transmits the optical signals to the control station with the same wavelength as one used for transmitting by a previous base station which communicates with the radio communication terminal before the movement so that the control station can use the same optical receiver for the radio communication terminal before and after its movement.

2. The network system of radio base stations as claimed in claim 1, **characterized in that:**
the optical coupler (75) provided in the base station splits off only a particular wavelength from the optical signals with a plurality of wavelengths to be transmitted using the wavelength multiplexing transmission method, and the base station further comprises an optical receiver (73) for receiving optical signals split off by the optical coupler;
the control station further comprises a plurality of variable-wavelength optical transmitters (64) for transmitting the optical signals used in the wavelength multiplexing transmission method, and the optical coupler (65) provided in the control station combines the optical signals from the variable-wavelength optical transmitter in order to transmit the optical signals with the wavelength multiplexing transmission method; and
when the radio communication terminal (MS) communicating with the base station moves and changes the base station to communicate with, the control station controls the wavelength of the variable-wavelength transmitter, and then transmits the optical signals to the new base station with a wavelength intended for use by the new base station.

3. The network system of radio base stations as claimed in claim 1, **characterized in that:**
the optical coupler (95) provided in the base station is a variable optical coupler and varies a wavelength to be split off from the optical signals having a plurality of wavelengths transmitted using the wavelength multiplexing transmission method, and the base station comprises an optical receiver (83) for receiving the optical signals split off by the variable optical coupler (85); and
when the radio communication terminal (MS) communicating with the base station moves and changes the base station to communicate with, the control station does not change the wavelength of the optical signals to be transmitted to the base station even when the radio communication terminal changes the base station to be communicate with, and the new base station splits off and receives the optical signals of the same wavelength from the control station with the variable optical coupler.

4. The network system of radio base stations as claimed in each of claims 1-3, **characterised in that:**
the base station further comprises a radio signal demodulator (113₁) for mobile communication for demodulating radio signals received from the radio communication terminal (MS) and for converting the demodulated signals into digital signals, an optical transmitter (116) for converting the digital signals intended for the control station converted by the radio signal demodulator for mobile communication into optical signals to be transmitted using the wavelength multiplexing transmission method, an optical receiver (115) for receiving optical signals transmitted by wavelength-multiplexing from the control station, and a radio signal modulator (113₂) for mobile communication for converting the digital signals converted by the optical receiver into radio frequency signals for mobile communication; and
the control station further comprises an optical receiver (107) for converting the optical signals received from the base station and transmitted using the wavelength multiplexing transmission method into digital signals, and an optical transmitter (106) for converting digital signals intended for the base station into wavelength-multiplexed optical signals.

5. The network system of radio base stations as claimed in each of claims 1-3, **characterized in that:**
the base station further comprises a radio signal demodulator (133₁) for mobile communication for demodulating radio signals for mobile communication received from the radio communication terminal (MS) and for converting the demodulated signals into digital signals, an entrance radio signal modulator (133₂) for converting the digital signals converted by the radio signal demodulator for mobile communication into entrance radio signals, an optical transmitter (136) for converting the entrance radio signals converted by the entrance radio signal modulator into optical signals in order to transmit the optical signals using the sub-carrier optical transmission method, an optical receiver (135) for converting the entrance radio signals transmitted using the sub-carrier optical transmission method into electrical signals, an entrance radio signal demodulator for converting the converted electrical entrance radio signals into digital signals, a radio signal modulator for mobile communication for converting the digital signals converted by the entrance radio signal demodulator into radio frequency signals for mobile communication; and
the control station further comprises an optical receiver (127) for converting optical signals transmitted with the entrance radio signals sent from the base station using the sub-carrier optical transmission method into electrical signals, an entrance radio signal demodulator (123) for converting the converted electrical entrance radio signals into digital signals, an entrance radio signal modulator (124) for converting the digital signals intended for base stations into the entrance radio signals, and an optical transmitter (126) for converting the entrance radio signals converted by the entrance radio signal modulator into optical signals in order to transmit the optical signals using the sub-carrier optical transmission method.

6. The network system of radio base stations as claimed in each of claims 1-3, **characterized in that:**
the base station further comprises an optical transmitter (156) for converting radio signals received from the radio communication terminal into optical signals in order to transmit the optical signals using the sub-carrier optical transmission method, and an optical receiver (155) for converting optical signals transmitted with radio signals received from the control station (140) using the sub-carrier optical transmission method into electrical signals; and
the control station further comprises an optical receiver (147) for converting optical signals transmitted with radio frequency signals for mobile communication using the sub-carrier optical transmission method into electrical signals, a radio signal demodulator (143) for mobile communication for converting the converted electrical radio frequency signals for mobile communication into digital signals, a radio signal modulator (144) for mobile communication for converting the digital signals intended for the base stations into radio frequency signals for mobile communication, and an optical transmitter (146) for converting the radio frequency signals for mobile communication converted by the radio signal modulator for mobile communication into optical signals to be transmitted using the sub-carrier optical transmission method.

7. A method for switching of base stations in a network system of radio base stations comprising base stations (BS) provided in a plurality of cells and a control station (40) controlling the base stations, in which the base stations and the control station are connected by optical fibers, wherein:
a wavelength for transmission from the base station to the control station is set at the beginning of a communication between the base station and the radio communication terminal, and this wavelength for transmission is fixed while the radio communication terminal (MS) is communicating;
**characterised in that** even when the radio communication terminal moves and changes the base station to communicate with a new base station which communicates with the radio communication terminal after a movement of the radio communication terminal transmits information from the radio communication terminal to the control station on the wavelength for transmission set for the radio communication terminal so that the control station can use the same optical receiver (43) for the radio communication terminal before and after its movement.

8. The method as claimed in claim 7 wherein:
the control station (60) comprises a variable-wavelength transmitter (64); **characterised in that** a different wavelength for transmission from the control station to the base station is set for each base station, and when the radio communication terminal (MS) moves and changes the base station to communicate with, the control station controls a wavelength of the variable-wavelength transmitter and transmits information intended for the radio communication terminal to a new base station which communicates with the radio communication terminal after a movement of the radio communication terminal, on the wavelength for transmission set for a new base station which communicates with the radio communication terminal after the movement.

9. The method as claimed in claim 7 **characterised in that:**
a different wavelength for transmission from the control station (80) to the base station is set for each base station, and when the radio communication terminal (MS) moves and changes the base station to communicate with, the control station transmits information of the radio communication terminal to a new base station which communicates with the radio communication terminal after a movement of the radio communication terminal on the wavelength for transmission set for a previous base station which communicates with the radio communication terminal before the movement.

## Patentansprüche

1. Netzsystem aus Funkbasisstationen mit in mehreren Zellen angeordneten Basisstationen (BS) und einer Zentralstation (40) zur Verwaltung der Basisstationen, in welchem Basisstationen und Zentralstation über Glasfaserkabel mittels eines Wellenlängenmultiplexübertragungsverfahrens verbunden sind, wobei:
die Basisstation einen wellenlängenvariablen Sender (54) zur Übertragung eines optischen Signals mit einer vorgegebenen Wellenlänge sowie einen Optokoppler (55) zur Bündelung optischer Signale des wellenlängenvariablen Senders aufweist, um die optischen Signale mittels des Wellenlängenmultiplexübertragungsverfahrens zu übertragen;
die Zentralstation mehrere optische Empfänger (43) zum Empfang von Wellenlängen der mit dem Wellenlängenmultiplexübertragungsverfahren übertragenen optischen Signale sowie einen Optokoppler (45) zur Wellenlängen-Entbündelung der von den Basisstationen an die optischen Empfänger übertragenen wellenlängengemultiplexten optischen Signale aufweist;
**dadurch gekennzeichnet, dass,** wenn das mit der Basisstation kommunizierende Funkkommunikationsendgerät (MS) seinen Standort ändert und die Basisstation für die Kommunikation wechselt, eine mit dem Funkkommunikationsendgerät nach dessen Standortänderung kommunizierende neue Basisstation die Wellenlänge des wellenlängenvariablen Senders steuert und danach die optischen Signale an die Zentralstation in derselben Wellenlänge überträgt, die eine zuvor mit dem Funkkommunikationsendgerät vor dessen Standortänderung kommunizierende Basisstation verwendet hat, damit die Zentralstation denselben optischen Empfänger für das Funkkommunikationsendgerät vor und nach dessen Standortänderung verwenden kann.

2. Netzsystem aus Funkbasisstationen nach Anspruch 1, **dadurch gekennzeichnet, dass:**
der in der Basisstation angeordnete Optokoppler (75) nur eine bestimmte mittels des Wellenlängenmultiplexübertragungsverfahrens zu übertragende Wellenlänge aus den optischen Signalen in mehreren Wellenlängen entbündelt und die Basisstation weiterhin einen optischen Empfänger (73) zum Empfang der vom Optokoppler entbündelten optischen Signale aufweist;
die Zentralstation weiterhin mehrere wellenlängenvariable optische Sender (64) zur Übertragung der im Wellenlängenmultiplexübertragungsverfahren verwendeten optischen Signale aufweist, und der in der Zentralstation angeordnete Optokoppler (65) die optischen Signale des wellenlängenvariablen Senders bündelt, um sie mittels des Wellenlängenmultiplexübertragungsverfahrens zu übertragen; und,
wenn das mit der Basisstation kommunizierende
Funkkommunikationsendgerät (MS) seinen Standort ändert und die Basisstation für die Kommunikation wechselt, die Zentralstation die Wellenlänge des wellenlängenvariablen Senders steuert und danach die optischen Signale an die neue Basisstation in einer von ihr zu verwendenden Wellenlänge überträgt.

3. Netzsystem aus Funkbasisstationen nach Anspruch 1, **dadurch gekennzeichnet, dass:** der in der Basisstation angeordnete Optokoppler (85) ein variabler Optokoppler ist und eine aus den mittels des Wellenlängenmultiplexübertragungsverfakens übertragenen optischen Signalen mit mehreren Wellenlängen zu entbündelnde Wellenlänge variiert, und die Basisstation einen optischen Empfänger (83) zum Empfang der vom variablen Optokoppler (85) entbündelten optischen Signale aufweist; und
die Zentralstation, wenn das mit der Basisstation kommunizierende Funkkommunikationsendgerät (MS) seinen Standort ändert und die Basisstation für die Kommunikation wechselt, die Wellenlänge der an die Basisstation zu übertragenden optischen Signale nicht ändert, auch wenn das Funkkommunikationsendgerät die Basisstation für die Kommunikation wechselt, und die neue Basisstation die optischen Signale von der Zentralstation in derselben Wellenlänge empfängt und mittels des variablen Optokopplers entbündelt.

4. Netzsystem aus Funkbasisstationen nach einem der Ansprüche 1-3,
**dadurch gekennzeichnet, dass:**
die Basisstation weiterhin aufweist einen Mobilkommunikations-Funksignaldemodulator (113₁) zur Demodulation der vom Funkkommunikationsendgerät (MS) empfangenen Funksignale und zur Umsetzung der demodulierten Signale in digitale Signale, einen optischen Sender (116) zur Umsetzung der vom Mobilkommunikations-Funlcsignaldernadulator umgesetzten digitalen Signale in für die Zentralstation bestimmte und mittels des Wellenläligenmultiplexübertragungsverfahrens zu übertragende optische Signale, einen optischen Empfänger (115) zum Empfang der mittels Wellenlängenmultiplex von der Zentralstation übertragenen optischen Signale sowie einen Mobilkommunikations-Funksignalmodulator (113₂) zur Umsetzung der vom optischer Empfänger in Radiofrequenzsignale für die Mobilkommunikation umgesetzten digitalen Signale; und
die Zentralstation weiterhin einen optischen Empfänger (107) zur Umsetzung der von der Basisstation empfangenen und mittels des Wellenlängenmultiplexübertragungsverfahrens übertragenen optischen Signale in digitale Signale sowie einen optischen Sender (106) zur Umsetzung der digitalen Signale in für die Basisstation bestimmte wellenlängen-gemultiplexte optische Signale aufweist.

5. Netzsystem aus Funkbasisstationen nach einem der Ansprüche 1-3, **dadurch gekennzeichnet, dass:**
die Basisstation weiterhin aufweist einen Mobilkommunikations-Funksignaldemodulator (133₁) zur Demodulation der vom Funkkommunikationsendgerät (MS) empfangenen Funksignale und zur Umsetzung der demodulierten Signale in digitale Signale, einen Eingangsfunksignal-Modulator (133₂) zur Umsetzung der vom Mobilkommunikations-Funksignaldemodulator umgesetzten digitalen Signale in Eingangsfunksignale, einen optischen Sender (136) zur Umsetzung der vom Eingangsfunksignal-Modulator umgesetzten Eingangsfunksignale in optische Signale, um sie mittels des optischen Hilfsträger-Übertragungsverfahrens zu übertragen, einen optischen Empfänger (135) zur Umsetzung der mittels des optischen Hilfsträger-Übertragungsverfahrens übertragenen Eingangsfunksignale in elektrische Signale, einen Eingangsfunksignal-Demodulator zur Umsetzung der umgesetzten elektrischen Eingangsfunksignale in digitale Signale, einen Mobilkommunikations-Funksignalmodulator zur Umsetzung der vom Eingangsfunksignal-Demodulator umgesetzten digitalen Signale in Funkfrequenzsignale für die Mobilkommunikation; und
die Zentralstation weiterhin einen optischen Empfänger (127) zur Umsetzung der mit den Eingangsfunksignalen von der Basisstation mittels des optischen Hilfsträger-Übertragungsverfahrens übertragenen optischen Signale in elektrische Signale, einen Eingangsfunksignal-Demodulator (123) zur Umsetzung der umgesetzten elektrischen Eingangsfunksignale in digitale Signale, einen Eingangsfunksignal-Modulator (124) zur Umsetzung der digitalen Signale in die für die Basisstationen bestimmten Eingangsfunksignale, und einen optischen Sender (126) zur Umsetzung der vom Eingangsfunksignal-Modulator umgesetzten Eingangsfunksignale in optische Signale, um sie mittels des optischen Hilfsträger-Übertragungsverfahrens zu übertragen.

6. Netzsystem aus Funkbasisstationen nach einem der Ansprüche 1-3, **dadurch gekennzeichnet, dass:**
die Basisstation weiterhin aufweist einen optischen Sender (156) zur Umsetzung der vom Funkkommunikationsgerät empfangenen Funksignale in optische Signale, um sie mittels des optischen Hilfsträger-Übertragungsverfahrens zu übertragen, sowie einen optischen Empfänger (155) zur Umsetzung der mit den Funksignalen von der Zentralstation (140) mittels des optischen Hilfsträger-Übertragungsverfahrens übertragenen optischen Signale in elektrische Signale; und
die Zentralstation weiterhin aufweist einen optischen Empfänger (147) zur Umsetzung der mit Mobilkommunikations-Radiofrequenzsignalen mittels des optischen Hilfsträger-Übertragungsverfahrens übertragenen optischen Signale in elektrische Signale, einen Mobilkommunikations-Funksignaldemodulator (143) zur Umsetzung der umgesetzten elektrischen Radiofrequenzsignale in digitale Signale, einen Mobilkommunikations-Funksignalmodulator (144) zur Umsetzung der digitalen Signale in für die Basisstationen bestimmte Mobilkommunikations-Radiofrequenzsignale sowie einen optischen Sender (146) zur Umsetzung der vom Mobilkommunikations-Funksignalmodulator umgesetzung Mobükommunikations-Radiofrequenzsignale in mittels des optischen Hilfsträger-Übertragungsverfahrens zu übertragende optische Signale.

7. Verfahren für die Umschaltung von Basisstationen in einem Netzsystem aus Funkbasisstationen (BS) mit in mehreren Zellen angeordneten Basisstationen (BS) und einer Zentralstation (40) zur Verwaltung der Basisstationen, in welchem Basisstationen und Zentralstation über Glasfaserkabel verbunden sind, wobei:
eine Wellenlänge für Übertragungen von der Basisstation zur Zentralstation zu Beginn einer Kommunikation zwischen Basisstation und Funkkommunikationsendgerät festgelegt und beibehalten wird, so lange das Funkkommunikationsendgerät (MS) kommuniziert;
**dadurch gekennzeichnet, dass,** auch wenn das Funkkommunikationsendgerät seinen Standort ändert und die Basisstation wechselt, um nach der Standortänderung mit einer neuen Basisstation zu kommunizieren, Informationen vom Funkkommunikationsendgerät an die Zentralstation in der für das Funkkommunikationsendgerät festgelegten Übertragungswellenlänge übertragen werden, damit die Zentralstation den gleichen optischen Empfänger (43) für das Funkkommunikationsendgerät vor und nach dessen Standortänderung verwenden kann.

8. Verfahren nach Anspruch 7, wobei:
die Zentralstation (60) einen wellenlängenvariablen Sender (64) aufweist; **dadurch gekennzeichnet, dass** für jede Basisstation eine unterschiedliche Wellenlänge für Übertragungen von Zentralstation zur Basisstation festgelegt wird und die Zentralstation, wenn das Funkkommunikationsendgerät (MS) seinen Standort ändert und die Basisstation für die Kommunikation wechselt, eine Wellenlänge des wellenlängenvariablen Senders (64) steuert und für das Funkkommunikationsendgerät bestimmte Informationen an eine mit dem Funkkommunikationsendgerät nach dessen Standortänderung kommunizierende neue Basisstation in der Übertragungswellenlänge überträgt, die für eine mit dem Funkkommunikationsendgerät nach dessen Standortänderung kommunizierende neue Basisstation festgelegt worden ist.

9. Verfahren nach Anspruch 7, **dadurch gekennzeichnet, dass:**
für jede Basisstation eine unterschiedliche Wellenlänge für Übertragungen von Zentralstation (80) zur Basisstation festgelegt wird und die Zentralstation, wenn das Funkkommunikationsendgerät (MS) seinen Standort ändert und die Basisstation für die Kommunikation wechselt, Informationen des Funkkommunikationsendgeräts an eine mit dem Funkkommunikationsendgerät nach dessen Standortänderung kommunizierende neue Basisstation auf der Übertragungswellenlänge überträgt, die für eine mit dem Funkkommunikationsendgerät vor dessen Standortänderung kommunizierende frühere Basisstation festgelegt worden ist.

## Revendications

1. Système de réseau de stations de base radio comprenant des stations de base (BS) prévues dans une pluralité de cellules et une station de commande (40) commandant les stations de base, dans lequel les stations de base et la station de commande sont connectées par des fibres optiques en utilisant un procédé de transmission par multiplexage en longueur d'onde, où :
la station de base comprend un transmetteur de longueur d'onde variable (54) pour transmettre un signal optique possédant une longueur d'onde prédéterminée, et un coupleur optique (55) pour combiner des signaux optiques en provenance du transmetteur de longueur d'onde variable afin de transmettre les signaux optiques en-utilisant le procédé de transmission par multiplexage en longueur d'onde ;
la station de commande comprend une pluralité de récepteurs optiques (43) pour recevoir des longueurs d'onde des signaux optiques transmis en utilisant le procédé de transmission par multiplexage en longueur d'onde, et un coupleur optique (45) pour séparer les signaux optiques multiplexés en longueur d'onde transmis à partir des stations de base vers les récepteurs optiques par longueur d'onde ;
**caractérisé en ce que** lorsque le terminal de communication radio (MS) communiquant avec la station de base se déplace et change de station de base avec laquelle communiquer, une nouvelle station de base qui communique avec le terminal de communication radio après un mouvement du terminal de communication radio commande la longueur d'onde du transmetteur de longueur d'onde variable, et transmet ensuite les signaux optiques à la station de commande avec la même longueur d'onde que celle utilisée pour la transmission par une station de base précédente qui communique avec le terminal de communication radio avant le mouvement, de manière à ce que la station de commande puisse utiliser le même récepteur optique pour le terminal de communication radio avant et après son mouvement.

2. Système de réseau de stations de base radio tel que revendiqué à la revendication 1, **caractérisé en ce que** :
le coupleur optique (75) prévu dans la station de base sépare uniquement une longueur d'onde particulière des signaux optiques avec une pluralité de longueurs d'onde à transmettre en utilisant le procédé de transmission par multiplexage en longueur d'onde, et la station de base comprend en outre un récepteur optique (73) pour recevoir des signaux optiques séparés par le coupleur optique ;
la station de commande comprend en outre une pluralité de transmetteurs optiques de longueur d'onde variable (64) pour transmettre les signaux optiques utilisés dans le procédé de transmission par multiplexage en longueur d'onde, et le coupleur optique (65) prévu dans la station de commande combine les signaux optiques en provenance du transmetteur optique de longueur d'onde variable afin de transmettre les signaux optiques avec le procédé de transmission par multiplexage en longueur d'onde ; et
lorsque le terminal de communication radio (MS) communiquant avec la station de base se déplace et change de station de base avec laquelle communiquer, la station de commande commande la longueur d'onde du transmetteur de longueur d'onde variable, et transmet ensuite les signaux optiques à la nouvelle station de base avec une longueur d'onde destinée à l'utilisation par la nouvelle station de base.

3. Système de réseau de stations de base radio tel que revendiqué à la revendication 1, **caractérisé en ce que** :
le coupleur optique (95) prévu dans la station de base est un coupleur optique variable et fait varier une longueur d'onde à séparer des signaux optiques possédant une pluralité de longueurs d'onde transmis en utilisant le procédé de transmission par multiplexage en longueur d'onde, et la station de base comprend un récepteur optique (83) pour recevoir les signaux optiques séparés par le coupleur optique variable (85) ; et
lorsque le terminal de communication radio (MS) communiquant avec la station de base se déplace et change de station de base avec laquelle communiquer, la station de commande ne change pas la longueur d'onde des signaux optiques à transmettre à la station de base même lorsque le terminal de communication radio change de station de base avec laquelle communiquer, et la nouvelle station de base sépare et reçoit les signaux optiques de la même longueur d'onde en provenance de la station de commande avec le coupleur optique variable.

4. Système de réseau de stations de base radio tel que revendiqué dans chacune des revendications 1-3, **caractérisé en ce que** :
la station de base comprend en outre un démodulateur de signaux radio (113₁) pour communication mobile pour démoduler des signaux radio reçus à partir du terminal de communication radio (MS) et pour convertir les signaux démodulés en signaux numériques, un transmetteur optique (116) pour convertir les signaux numériques destinés à la station de commande convertis par le démodulateur de signaux radio pour communication mobile en signaux optiques à transmettre en utilisant le procédé de transmission par multiplexage en longueur d'onde, un récepteur optique (115) pour recevoir des signaux optiques transmis par multiplexage en longueur d'onde à partir de la station de commande, et un modulateur de signaux radio (113₂) pour communication mobile pour convertir les signaux numériques convertis par le récepteur optique en signaux de radiofréquence pour communication mobile ; et
la station de commande comprend en outre un récepteur optique (107) pour convertir les signaux optiques reçus à partir de la station de base et transmis en utilisant le procédé de transmission par multiplexage en longueur d'onde en signaux numériques, et un transmetteur optique (106) pour convertir des signaux numériques destinés à la station de base en signaux optiques multiplexés en longueur d'onde.

5. Système de réseau de stations de base radio tel que revendiqué dans chacune des revendications 1-3, **caractérisé en ce que** :
la station de base comprend en outre un démodulateur de signaux radio (133₁) pour communication mobile pour démoduler des signaux radio pour communication mobile reçus à partir du terminal de communication radio (MS) et pour convertir les signaux démodulés en signaux numériques, un modulateur de signaux radio en entrée (133₂) pour convertir les signaux numériques convertis par le démodulateur de signaux radio pour communication mobile en signaux radio en entrée, un transmetteur optique (136) pour convertir les signaux radio en entrée convertis par le modulateur de signaux radio en entrée en signaux optiques afin de transmettre les signaux optiques en utilisant le procédé de transmission optique par onde sous-porteuse, un récepteur optique (135) pour convertir les signaux radio en entrée transmis en utilisant le procédé de transmission optique par onde sous-porteuse en signaux électriques, un démodulateur de signaux radio en entrée pour convertir les signaux radio en entrée électriques convertis en signaux numériques, un modulateur de signaux radio pour communication mobile pour convertir les signaux numériques convertis par le démodulateur de signaux radio en entrée en signaux de radiofréquence pour communication mobile ; et
la station de commande comprend en outre un récepteur optique (127) pour convertir des signaux optiques transmis avec les signaux radio en entrée envoyés à partir de la station de base en utilisant le procédé de transmission optique par onde sous-porteuse en signaux électriques, un démodulateur de signaux radio en entrée (123) pour convertir les signaux radio en entrée électriques convertis en signaux numériques, un modulateur de signaux radio en entrée (124) pour convertir les signaux numériques destinés à des stations de base en signaux radio en entrée, et un transmetteur optique (126) pour convertir les signaux radio en entrée convertis par le modulateur de signaux radio en entrée en signaux optiques afin de transmettre les signaux optiques en utilisant le procédé de transmission optique par onde sous-porteuse.

6. Système de réseau de stations de base radio tel que revendiqué dans chacune des revendications 1-3, **caractérisé en ce que** :
la station de base comprend en outre un transmetteur optique (156) pour convertir des signaux radio reçus à partir du terminal de communication radio en signaux optiques afin de transmettre les signaux optiques en utilisant le procédé de transmission optique par onde sous-porteuse, et un récepteur optique (155) pour convertir des signaux optiques transmis avec des signaux radio reçus à partir de la station de commande (140) en utilisant le procédé de transmission optique par onde sous-porteuse en signaux électriques ; et
la station de commande comprend en outre un récepteur optique (147) pour convertir des signaux optiques transmis avec des signaux de radiofréquence pour communication mobile en utilisant le procédé de transmission optique par onde sous-porteuse en signaux électriques, un démodulateur de signaux radio (143) pour communication mobile pour convertir les signaux de radiofréquence électriques convertis pour communication mobile en signaux numériques, un modulateur de signaux radio (144) pour communication mobile pour convertir les signaux numériques destinés aux stations de base en signaux de radiofréquence pour communication mobile, et un transmetteur optique (146) pour convertir les signaux de radiofréquence pour communication mobile convertis par le démodulateur de signaux radio pour communication mobile en signaux optiques à transmettre en utilisant le procédé de transmission optique par onde sous-porteuse.

7. Procédé de commutation de stations de base dans un système de réseau de stations de base radio comprenant des stations de base (BS) prévues dans une pluralité de cellules et une station de commande (40) commandant les stations de base, dans lequel les stations de base et la station de commande sont connectées par des fibres optiques, où :
une longueur d'onde pour la transmission de la station de base à la station de commande est établie au début d'une communication entre la station de base et le terminal de communication radio, et cette longueur d'onde pour la transmission est fixe tandis que le terminal de communication radio (MS) communique ;
**caractérisé en ce que** même lorsque le terminal de communication radio se déplace et change de station de base avec laquelle communiquer, une nouvelle station de base qui communique avec le terminal de communication radio après un mouvement du terminal de communication radio transmet des informations à partir du terminal de communication radio vers la station de commande sur la longueur d'onde pour la transmission établie pour le terminal de communication radio, de manière à ce que la station de commande puisse utiliser le même récepteur optique (43) pour le terminal de communication radio avant et après son mouvement.

8. Procédé tel que revendiqué à la revendication 7 où :
la station de commande (60) comprend un transmetteur de longueur d'onde variable (64) ; **caractérisé en ce qu'**une différente longueur d'onde pour la transmission à partir de la station de commande à la station de base est établie pour chaque station de base, et lorsque le terminal de communication radio (MS) se déplace et change de station de base avec laquelle communiquer, la station de commande commande une longueur d'onde du transmetteur de longueur d'onde variable et transmet des informations destinées au terminal de communication radio à une nouvelle station de base qui communique avec le terminal de communication radio après un mouvement du terminal de communication radio, sur la longueur d'onde pour la transmission établie pour une nouvelle station de base qui communique avec le terminal de communication radio après le mouvement.

9. Procédé tel que revendiqué à la revendication 7 **caractérisé en ce que** :
une différente longueur d'onde pour la transmission à partir de la station de commande (80) à la station de base est établie pour chaque station de base, et lorsque le terminal de communication radio (MS) se déplace et change de station de base avec laquelle communiquer, la station de commande transmet des informations du terminal de communication radio à une nouvelle station de base qui communique avec le terminal de communication radio après un mouvement du terminal de communication radio sur la longueur d'onde pour la transmission établie pour une station de base précédente qui communique avec le terminal de communication radio avant le mouvement.
